# EUROPEAN PATENT APPLICATION

(11) **EP 3 859 223 A1**
(43) Date of publication of application: **04.08.2021**
(21) Application number: 19867135.6
(22) Date of filing: 24.09.2019
(51) Int. Cl.: F24F 11/77, F24F 5/00, F24F 11/36, F25B 1/00, F25B 39/00, F25B 49/02

(54) **HEAT LOAD PROCESSING SYSTEM**

(30) Priority: 28.09.2018 JP 2018184831
(71) Applicant: DAIKIN INDUSTRIES, LTD., Osaka 530-8323 (JP)
(72) Inventor: KOBAYASHI, Toshiyuki, Kita-ku, Osaka-shi Osaka 530-8323 (JP); MOMONO, Toshiyuki, Kita-ku, Osaka-shi Osaka 530-8323 (JP)
(74) Representative: Hoffmann Eitle
(86) International application number: PCT/JP2019/037320
(87) International publication number: WO 2020/067040

(57) **Abstract**

Provided is a measure against a refrigerant leak. A heat load processing system (100) includes: a heat exchanger unit (30) including a heat exchanger (33); a refrigerant leak detection unit (70, 84); and a controller (80) that controls an operation of a ventilator (200). The heat exchanger (33) is connected to a refrigerant pipe (Pb, Pc) through which a refrigerant flows and a heat medium pipe (Hb, Hc, Hd) through which a heat medium flows, and configured to cause the refrigerant and the heat medium to exchange heat with each other. The refrigerant leak detection unit (70, 84) detects a refrigerant leak in the heat exchanger unit (30). The ventilator (200) ventilates in a facility device room (R) where the heat exchanger unit (30) is installed. When a refrigerant leak is detected by the refrigerant leak detection units (70, 84), the controller (80) executes a process (a refrigerant leak third control) of increasing a ventilation air volume of the ventilator (200).

## Description

### TECHNICAL FIELD

The present disclosure relates to a heat load processing system.

### BACKGROUND ART

Conventionally, as disclosed in Patent Literature 1 (JP 2006-38323 A), there is known a heat exchanger unit including a heat exchanger that is connected to a refrigerant pipe through which a refrigerant flows and a heat medium pipe through which a heat medium flows, to cause the refrigerant and the heat medium to exchange heat with each other. In Patent Literature 1, the heat exchanger unit is installed in a facility device room.

### SUMMARY OF THE INVENTION

### <Technical Problem>

In such a heat exchanger unit, since damage, deterioration over time, poor connection, and the like may occur in the refrigerant pipe and the heat exchanger and the like, measures against a refrigerant leak are required.

### <Solution to Problem>

A heat load processing system according to a first aspect includes a heat exchanger unit, a refrigerant leak detection unit, and a control unit. The heat exchanger unit includes a heat exchanger. The heat exchanger is connected to a refrigerant pipe and a heat medium pipe. The refrigerant pipe is a pipe through which a refrigerant flows. The heat medium pipe is a pipe through which a heat medium flows. The heat exchanger causes the refrigerant and the heat medium to exchange heat with each other. The refrigerant leak detection unit detects a refrigerant leak in the heat exchanger unit. The control unit controls an operation of a ventilator. The ventilator ventilates in a facility device room. In the facility device room, the heat exchanger unit is installed. When the refrigerant leak detection unit detects a refrigerant leak, the control unit performs a first process. The first process is a process of increasing a ventilation air volume of the ventilator.

This promotes discharging of the leaking refrigerant from the facility device room to another space, even when a refrigerant leak occurs in the heat exchanger unit. As a result, an increase in concentration of the refrigerant leaking in the facility device room is reduced.

The "ventilator" here is not limited as long as it is a device for ventilating in the facility device room, but is, for example, a device including a fan that generates an air flow, or an actuator of a door, a window, a shutter, or the like in which opening and closing is controllable. In addition, "ventilation" here is not limited to natural ventilation or forced ventilation.

The "facility device room" here is a space where people can come and go and stay, and a space where the heat exchanger is installed. For example, "facility device room" is a space where electric facilities such as a switchboard and a power generator or a cold energy device such as a boiler are disposed. For example, "facility device room" is a space such as a basement room where people can walk.

The "refrigerant leak detection unit" is a computer that determines presence or absence of the refrigerant leak based on a refrigerant leak sensor for directly detecting the refrigerant (leaking refrigerant) that is leaking from a refrigerant circuit, a pressure sensor or a temperature sensor for detection of states (a pressure or a temperature) of the refrigerant in the refrigerant circuit, and/or detection values of the sensors.

A heat load processing system according to a second aspect is the heat load processing system according to the first aspect, and the ventilator includes a ventilation fan. The ventilation fan is installed in the facility device room. The ventilation fan ventilates. In the first process, the control unit controls an operation of the ventilation fan so as to increase the ventilation air volume. This makes it easy to discharge the leaking refrigerant from the facility device room to another space when a refrigerant leak occurs in the heat exchanger unit.

A heat load processing system according to a third aspect is the heat load processing system according to the second aspect, in which, in the first process, the control unit increases an operating time per unit time of the ventilation fan that is operating intermittently.

A heat load processing system according to a fourth aspect is the heat load processing system according to the second or third aspect, in which, in the first process, the control unit continuously operates the ventilation fan that is operating intermittently.

A heat load processing system according to a fifth aspect is the heat load processing system according to any one of the first to fourth aspects, and further includes a first fan. The first fan is located in the heat exchanger unit. The first fan is configured to provide an air flow. The air flow is a flow of air flowing from inside of the heat exchanger unit to outside. In the first process, the control unit shifts the first fan to an operating state or increases the number of rotations of the first fan. This further promotes, when a refrigerant leak occurs in the heat exchanger unit, that the leaking refrigerant flows from the heat exchanger unit to the facility device room, and is then discharged from the facility device room to another space.

A heat load processing system according to a sixth aspect is the heat load processing system according to any one of the first to fifth aspects, in which the ventilator includes an opening and closing mechanism. The opening and closing mechanism can be switched between an open state and a closed state. In the open state, the opening and closing mechanism communicates between the facility device room and another space. In the closed state, the opening and closing mechanism interrupts between the facility device room and the other space. The control unit controls the opening and closing mechanism to the open state in the first process. This makes it easy to discharge the leaking refrigerant from the facility device room to the other space when a refrigerant leak occurs in the heat exchanger unit.

The "opening and closing mechanism" here is not limited as long as it is a device switchable between the open state for communicating between the facility device room and another space and the closed state for interrupting between the facility device room and the other space, but is, for example, a door, a window, a shutter, or the like opening and closing of which is controllable.

A heat load processing system according to a seventh aspect is the heat load processing system according to any one of the first to sixth aspects, and further includes a second fan. The second fan is arranged near the heat medium pipe. In the first process, the control unit shifts the second fan to an operating state or increases the number of rotations of the second fan. This reduces flowing of the leaking refrigerant into another use-side space via the heat medium pipe when a refrigerant leak occurs in the heat exchanger unit.

### BRIEF DESCRIPTION OF THE DRAWINGS

FIG. 1 is a schematic configuration diagram of a heat load processing system.
FIG. 2 is a diagrammatic illustration showing a concrete example of a refrigerant used in a refrigerant circuit.
FIG. 3 is a diagrammatic illustration showing a manner of installation of the heat load processing system.
FIG. 4 is a schematic plan view of a facility device room in which a heat exchanger unit is installed.
FIG. 5 is a perspective view of the heat exchanger unit.
FIG. 6 is a diagrammatic illustration showing a manner of disposition of devices in a casing in a plan view.
FIG. 7 is a diagrammatic illustration showing the manner of disposition of the devices in the casing in a side view.
FIG. 8 is a diagrammatic illustration showing the manner of disposition of the devices in the casing in a front view.
FIG. 9 is a diagrammatic illustration of a bottom plate in a plan view.
FIG. 10 is a diagrammatic illustration of the bottom plate in a side view.
FIG. 11 is a diagrammatic illustration schematically showing a manner of disposition of an exhaust fan unit and a cooling fan in the casing.
FIG. 12 is a block diagram schematically showing a controller and components connected to the controller.
FIG. 13 is a flowchart of exemplary processing to be performed by the controller.
FIG. 14 is a perspective view of a heat exchanger unit according to Modification 1.
FIG. 15 is a diagrammatic illustration showing a manner of disposition of devices in the heat exchanger unit according to Modification 1 in a plan view.
FIG. 16 is a diagrammatic illustration showing the manner of disposition of the devices in the heat exchanger unit according to Modification 1 in a front view.
FIG. 17 is a diagrammatic illustration showing the manner of disposition of the devices in the heat exchanger unit according to Modification 1 in a side view.
FIG. 18 is a diagrammatic illustration schematically showing a manner of a configuration of a heat load processing system according to Modification 1.

### DESCRIPTION OF EMBODIMENTS

With reference to the drawings, a heat load processing system 100 according to an embodiment of the present disclosure will be described below. Note that the following embodiment is merely a concrete example of the present disclosure and does not intend to limit the technical scope of the present disclosure. The embodiment can be changed as appropriate without departing from the gist of the present disclosure. The following description may include expressions such as "up", "down", "left", "right", "front (front side)", and "rear (rear side)" indicating directions. Unless otherwise specified, these directions indicate directions shown by arrows in the figures. Note that these expressions related to the directions are used merely to facilitate understanding of the embodiment and do not intend to limit the ideas according to the present disclosure.

### (1) Heat load processing system 100

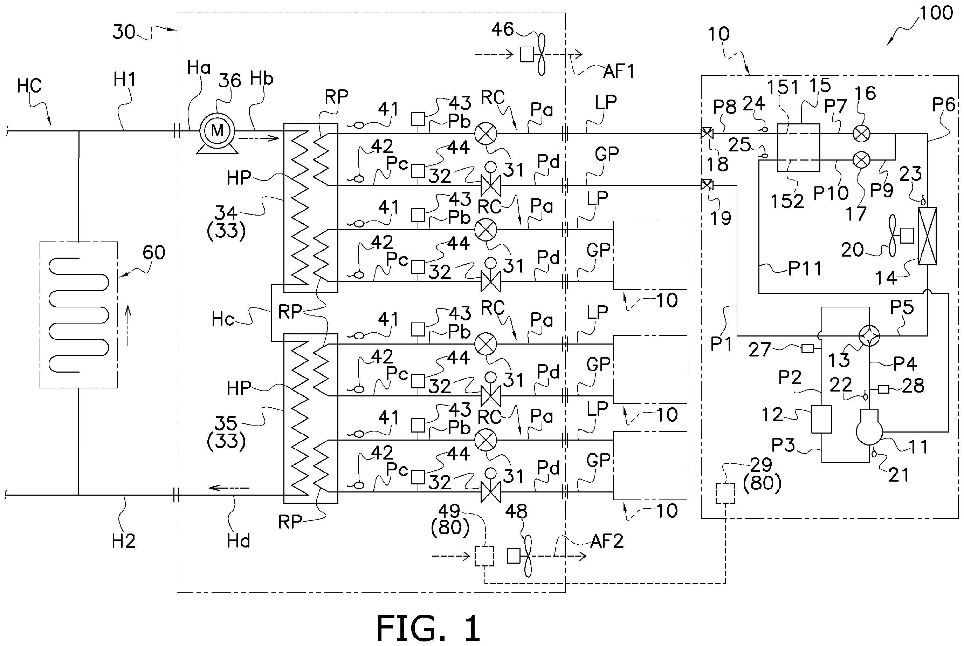

FIG. 1 is a schematic configuration diagram of a heat load processing system 100. The heat load processing system 100 is a system for processing a heat load in an installation environment. In the embodiment, the heat load processing system 100 is an air conditioning system that performs air conditioning of a target space.

The heat load processing system 100 mainly includes a plurality of (here, four) heat-source-side units 10, a heat exchanger unit 30, a plurality of (here, four) use-side units 60, a plurality of (here, four) liquid-side connection pipes LP, a plurality of (here, four) gas-side connection pipes GP, a first heat medium connection pipe H1 and a second heat medium connection pipe H2, a refrigerant leak sensor 70, and a controller 80 that controls an operation of the heat load processing system 100.

In the heat load processing system 100, the heat-source-side units 10 and the heat exchanger unit 30 are connected to each other via the liquid-side connection pipes LP and the gas-side connection pipes GP to thereby form refrigerant circuits RC through which a refrigerant circulates. In the heat load processing system 100, in relation to the fact that the plurality of heat-source-side units 10 are arranged in parallel, the plurality of (here, four) refrigerant circuits RC are formed. In other words, in the heat load processing system 100, the plurality of heat-source-side units 10 and the heat exchanger unit 30 form the plurality of refrigerant circuits RC. The heat load processing system 100 performs a vapor compression refrigeration cycle in each of the refrigerant circuits RC.

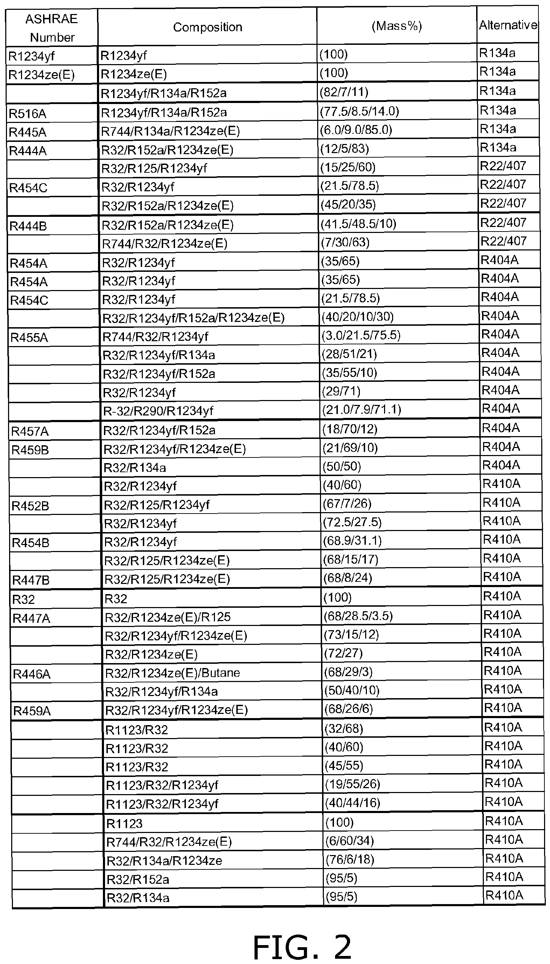

In the embodiment, the refrigerant filled into the refrigerant circuits RC is a flammable refrigerant. Here, the flammable refrigerant includes refrigerants falling into Class 3 (higher flammability), Class 2 (Flammable), and Sub class 2L (Lower flammability) in accordance with the United States ASHRAE 34 Designation and safety classification of refrigerant or ISO 817 Refrigerants-Designation and safety classification. For example, concrete examples of the refrigerant used in the embodiment are shown in FIG. 2. In FIG. 2, "ASHRAE Number" represents ASHRAE number of the refrigerant specified in ISO 817, "Composition" represents ASHRAE number of substances included in the refrigerant, "Mass %" represents percent concentrations of mass of respective substances included in the refrigerant, and "Alternative" represents a name of a substance often replaced by the refrigerant. The refrigerant used specifically in the embodiment is R32. The refrigerant filled into the refrigerant circuits RC may be a refrigerant not illustrated in FIG. 2 and may be a CO₂ refrigerant or a refrigerant such as ammonia having toxicity, for example. The refrigerants filled into the respective refrigerant circuits RC do not necessarily have to be the same refrigerants.

In the heat load processing system 100, the heat exchanger unit 30 and each of the use-side units 60 are connected to each other via the first heat medium connection pipe H1 and the second heat medium connection pipe H2 to thereby form a heat medium circuit HC through which a heat medium circulates. In other words, in the heat load processing system 100, the heat exchanger unit 30 and each of the use-side units 60 form the heat medium circuit HC. In the heat medium circuit HC, a pump 36 (described later) of the heat exchanger unit 30 is driven to thereby circulate the heat medium.

In the embodiment, the heat medium filled into the heat medium circuit HC is a liquid medium such as water and brine, for example. Examples of the brine include an aqueous solution of sodium chloride, an aqueous solution of calcium chloride, an aqueous solution of ethylene glycol, and an aqueous solution of propylene glycol. The liquid medium is not limited to those kinds mentioned here as the examples and it is possible to select a suitable kind of a liquid medium. The brine is used as the heat medium specifically in the embodiment.

### (2) Detailed configurations

### (2-1) Heat-source-side unit 10

In the embodiment, the heat load processing system 100 has the four heat-source-side units 10 (see FIG. 1). The heat exchanger unit 30 cools or heats the liquid medium with a refrigerant cooled or heated in the four heat-source-side units 10. Note that the number of heat-source-side units 10 is merely an example and the number is not limited to four. There may be provided, for example, one to three or five or more heat-source-side unit(s) 10. FIG. 1 illustrates an internal configuration of only one of the four heat-source-side units 10 and does not illustrate internal configurations of the other three heat-source-side units 10. The heat-source-side units 10 not illustrated in the figure have similar configurations to the heat-source-side unit 10 described below.

The heat-source-side units 10 are units that cool or heat the refrigerant by using air as a heat source. Each of the heat-source-side units 10 is individually connected to the heat exchanger unit 30 via the liquid-side connection pipe LP and the gas-side connection pipe GP. In other words, each of the respective heat-source-side units 10 individually forms the refrigerant circuit RC together with the heat exchanger unit 30. In other words, in the heat load processing system 100, the plurality of (here, four) heat-source-side units 10 are respectively connected to the heat exchanger unit 30 to thereby form the plurality of (here, four) refrigerant circuits RC. Note that the respective refrigerant circuits RC are separated from each other and not communicating with each other.

An installation place of each of the heat-source-side units 10 is not limited and may be a space on a rooftop or around a building, for example. Each of the heat-source-side units 10 is connected to the heat exchanger unit 30 via the liquid-side connection pipe LP and the gas-side connection pipe GP and forms a part of the refrigerant circuit RC.

Each of the heat-source-side units 10 mainly includes, as devices forming the refrigerant circuit RC, a plurality of refrigerant pipes (a first pipe P1 to an eleventh pipe P11), a compressor 11, an accumulator 12, a four-way switching valve 13, a heat-source-side heat exchanger 14, a subcooler 15, a heat-source-side first control valve 16, a heat-source-side second control valve 17, a liquid-side shutoff valve 18, and a gas-side shutoff valve 19.

The first pipe P1 connects the gas-side shutoff valve 19 and a first port of the four-way switching valve 13. The second pipe P2 connects an inlet port of the accumulator 12 and a second port of the four-way switching valve 13. The third pipe P3 connects an outlet port of the accumulator 12 and an intake port of the compressor 11. The fourth pipe P4 connects a discharge port of the compressor 11 and a third port of the four-way switching valve 13. The fifth pipe P5 connects a fourth port of the four-way switching valve 13 and a gas-side in-and-out port of the heat-source-side heat exchanger 14. The sixth pipe P6 connects a liquid-side in-and-out port of the heat-source-side heat exchanger 14 and one end of the heat-source-side first control valve 16. The seventh pipe P7 connects another end of the heat-source-side first control valve 16 and one end of a main flow path 151 of the subcooler 15. The eighth pipe P8 connects another end of the main flow path 151 of the subcooler 15 and one end of the liquid-side shutoff valve 18.

The ninth pipe P9 connects a portion between opposite ends of the sixth pipe P6 and one end of the heat-source-side second control valve 17. The tenth pipe P10 connects another end of the heat-source-side second control valve 17 and one end of a sub flow path 152 of the subcooler 15. The eleventh pipe P11 connects another end of the sub flow path 152 of the subcooler 15 and an injection port of the compressor 11.

Actually, each of the refrigerant pipes (PI to P11) may include a single pipe or a plurality of pipes connected to each other via joints or the like.

The compressor 11 is a device that compresses a low-pressure refrigerant until the refrigerant turns into a high-pressure refrigerant in the refrigeration cycle. The compressor 11 used in this embodiment is a closed compressor in which a compression element of a displacement type, such as rotary type or scroll type, is driven to rotate by a compressor motor (not illustrated). An inverter can control an operating frequency of the compressor motor. In other words, the compressor 11 has a controllable capacity. However, the compressor 11 may be, for example, a fixed capacity compressor.

The accumulator 12 is a container for suppressing excessive suction of the liquid refrigerant into the compressor 11. The accumulator 12 has a predetermined capacity depending on an amount of the refrigerant filled in the refrigerant circuit RC.

The four-way switching valve 13 is a flow path switching mechanism for changing a flow of the refrigerant in the refrigerant circuit RC. The four-way switching valve 13 is switchable between a forward cycle state and a reverse cycle state. The four-way switching valve 13, in the forward cycle state, communicates between the first port (the first pipe P1) and the second port (the second pipe P2) and communicates between the third port (the fourth pipe P4) and the fourth port (the fifth pipe P5) (see solid lines in the four-way switching valve 13 in FIG. 1). The four-way switching valve 13, in the reverse cycle state, communicates between the first port (the first pipe P1) and the third port (the fourth pipe P4) and communicates between the second port (the second pipe P2) and the fourth port (the fifth pipe P5) (see broken lines in the four-way switching valve 13 in FIG. 1).

The heat-source-side heat exchanger 14 is a heat exchanger that functions as a condenser (or a radiator) or an evaporator for the refrigerant. The heat-source-side heat exchanger 14 functions as the condenser for the refrigerant during a forward cycle operation (an operation with the four-way switching valve 13 in the forward cycle state). On the other hand, the heat-source-side heat exchanger 14 functions as the evaporator for the refrigerant during a reverse cycle operation (an operation with the four-way switching valve 13 in the reverse cycle state). The heat-source-side heat exchanger 14 includes a plurality of heat transfer tubes and fins (not illustrated). The heat-source-side heat exchanger 14 is configured to cause the refrigerant in the heat transfer tubes to exchange heat with air (a heat-source-side air flow described later) passing around the heat transfer tubes or the heat transfer fins.

The subcooler 15 is a heat exchanger that makes the incoming refrigerant into liquid refrigerant in a subcooled state. The subcooler 15 is a double-pipe heat exchanger, for example, and includes the main flow path 151 and the sub flow path 152. The subcooler 15 is configured to cause the refrigerant flowing through the main flow path 151 and the refrigerant flowing through the sub flow path 152 to exchange heat with each other.

The heat-source-side first control valve 16 is an electronic expansion valve whose opening degree is controllable. By controlling the opening degree, the heat-source-side first control valve 16 decompresses the incoming refrigerant or adjusts a flow rate of the incoming refrigerant. The heat-source-side first control valve 16 is switchable between an open state and a closed state. The heat-source-side first control valve 16 is disposed between the heat-source-side heat exchanger 14 and the subcooler 15 (the main flow path 151).

The heat-source-side second control valve 17 is an electronic expansion valve whose opening degree is controllable. By controlling the opening degree, the heat-source-side second control valve 17 decompresses the incoming refrigerant or adjusts a flow rate of the incoming refrigerant. The heat-source-side second control valve 17 is switchable between an open state and a closed state. The heat-source-side second control valve 17 is disposed between the heat-source-side heat exchanger 14 and the subcooler 15 (the sub flow path 152).

The liquid-side shutoff valve 18 is a manual valve disposed at a joint between the eighth pipe P8 and the liquid-side connection pipe LP. The liquid-side shutoff valve 18 has one end connected to the eighth pipe P8 and another end connected to the liquid-side connection pipe LP.

The gas-side shutoff valve 19 is a manual valve disposed at a joint between the first pipe P1 and the gas-side connection pipe GP. The gas-side shutoff valve 19 has one end connected to the first pipe P1 and another end connected to the gas-side connection pipe GP.

Each of the heat-source-side units 10 has a heat-source-side fan 20 that generates a heat-source-side air flow passing through the heat-source-side heat exchanger 14. The heat-source-side fan 20 is a fan configured to supply, to the heat-source-side heat exchanger 14, the heat-source-side air flow for cooling or heating the refrigerant flowing through the heat-source-side heat exchanger 14. The heat-source-side fan 20 includes a heat-source-side fan motor (not illustrated) that is a drive source and a start and a stop and the number of rotations of the heat-source-side fan 20 are appropriately controlled in accordance with a situation.

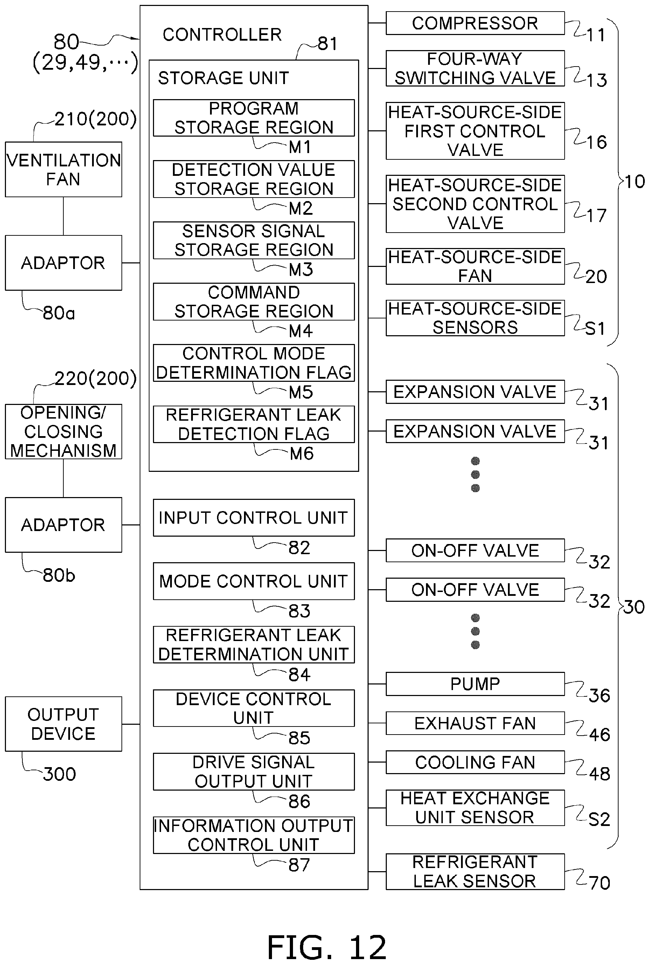

The heat-source-side unit 10 also includes a plurality of heat-source-side sensors S1 (see FIG. 12) for detection of states (mainly, a pressure or a temperature) of the refrigerant in the refrigerant circuit RC. The heat-source-side sensors S1 include pressure sensors or temperature sensors such as thermistors or thermocouples. The heat-source-side sensors S1 include a first temperature sensor 21 that detects a temperature (a suction temperature) of the refrigerant on a suction side (in the third pipe P3) of the compressor 11 or a second temperature sensor 22 that detects a temperature (a discharge temperature) of the refrigerant on a discharge side (in the fourth pipe P4) of the compressor 11, for example. The heat-source-side sensors S1 also include a third temperature sensor 23 that detects a temperature of the refrigerant on a liquid side (in the sixth pipe P6) of the heat-source-side heat exchanger 14, a fourth temperature sensor 24 that detects a temperature of the refrigerant in the eighth pipe P8, or a fifth temperature sensor 25 that detects a temperature of the refrigerant in the eleventh pipe P11, for example. The heat-source-side sensors S1 also include a first pressure sensor 27 that detects a pressure (a suction pressure) of the refrigerant on a suction side (in the second pipe P2) of the compressor 11 and a second pressure sensor 28 that detects a pressure (a discharge pressure) of the refrigerant on a discharge side (in the fourth pipe P4) of the compressor 11, for example.

Each of the heat-source-side units 10 also has a heat-source-side unit control unit 29 that controls operations and states of the respective devices included in the heat-source-side unit 10. The heat-source-side unit control unit 29 includes, in order to perform its functions, various kinds of electric circuits, a microcomputer having a microprocessor and a memory chip on which programs performed by the microprocessor are stored, and the like. The heat-source-side unit control unit 29 is electrically connected to the respective devices (e. g., the devices 11, 13, 16, 17, and 20) and the heat-source-side sensors S1 included in the heat-source-side unit 10 to exchange signals with the devices and the heat-source-side sensors S1. The heat-source-side unit control unit 29 is electrically connected to a heat exchanger unit control unit 49 (described later) of the heat exchanger unit 30 or the like, via a communication line to exchange control signals with the heat exchanger unit control unit 49.

### (2-2) Heat exchanger unit 30

The heat exchanger unit 30 is a device that performs at least one of cooling and heating of a heat medium by causing the heat medium and the refrigerant to exchange heat with each other. In the embodiment, the heat exchanger unit 30 causes the heat medium and the refrigerant to exchange heat with each other to thereby cool and heat the heat medium. The heat medium cooled or heated by the liquid refrigerant in the heat exchanger unit 30 is sent to the use-side units 60.

The heat exchanger unit 30 is a unit that cools or heats the heat medium sent to the use-side units 60 by causing the heat medium and the refrigerant to exchange heat with each other. An installation place of the heat exchanger unit 30 is not limited and may be an interior space such as a facility device room, for example. The heat exchanger unit 30 includes, as devices forming the respective refrigerant circuits RC, the same number of a plurality of (here, four) refrigerant pipes (refrigerant pipes Pa, Pb, Pc, Pd), expansion valves 31, and on-off valves 32 as the heat-source-side units 10 (the refrigerant circuits RC). The heat exchanger unit 30 also includes heat exchangers 33 as devices forming the respective refrigerant circuits RC and the heat medium circuit HC.

Each of the refrigerant pipes Pa connects the liquid-side connection pipe LP and one end of the expansion valve 31. Each of the refrigerant pipes Pb connects another end of the expansion valve 31 and a liquid-side refrigerant in-and-out port of one of the heat exchangers 33. Each of the refrigerant pipes Pc connects a gas-side refrigerant in-and-out port of one of the heat exchangers 33 and one end of the on-off valve 32. Each of the refrigerant pipes Pd connects another end of the on-off valve 32 and the gas-side connection pipe GP. Actually, each of the refrigerant pipes (Pa to Pd) may include a single pipe or a plurality of pipes connected to each other via joints or the like.

Each of the expansion valves 31 is an electronic expansion valve whose opening degree is controllable. By controlling the opening degree, the expansion valve 31 decompresses the incoming refrigerant or adjusts a flow rate of the incoming refrigerant. The expansion valve 31 is switchable between an open state and a closed state. The expansion valve 31 is disposed between the heat exchanger 33 and the liquid-side connection pipe LP.

Each of the on-off valves 32 is a control valve switchable between an open state and a closed state. The on-off valve 32 interrupts the refrigerant in the closed state. The on-off valve 32 is disposed between the heat exchanger 33 and the gas-side connection pipe GP.

A plurality of flow paths (refrigerant flow paths RP) for the refrigerant flowing through the refrigerant circuits RC are formed in each of the heat exchangers 33. In the heat exchangers 33, each of the refrigerant flow paths RP does not communicate with other refrigerant flow paths RP. In relation to this, in the heat exchangers 33, the same number of (here, four) liquid-side in-and-out ports and gas-side in-and-out ports of the refrigerant flow paths RP as the refrigerant flow paths RP are formed. In the heat exchangers 33, flow paths (heat medium flow paths HP) for the heat medium flowing through the heat medium circuit HC are formed.

To put it more concretely, the heat exchangers 33 include a first heat exchanger 34 and a second heat exchanger 35. The first heat exchanger 34 and the second heat exchanger 35 are formed as separate bodies. In each of the first heat exchanger 34 and the second heat exchanger 35, two separate refrigerant flow paths RP are formed. In each of the first heat exchanger 34 and the second heat exchanger 35, one end of each of the refrigerant flow paths RP is connected to the refrigerant pipe Pb of the corresponding refrigerant circuit RC and another end of each of the refrigerant flow paths RP is connected to the refrigerant pipe Pc of the corresponding refrigerant circuit RC. In the first heat exchanger 34, one end of the heat medium flow path HP is connected to a heat medium pipe Hb (described later) and another end of the heat medium flow path HP is connected to a heat medium pipe Hc (described later). In the second heat exchanger 35, one end of the heat medium flow path HP is connected to the pipe Hc (described later) and another end of the heat medium flow path HP is connected to a heat medium pipe Hd (described later). The heat medium flow paths HP of the first heat exchanger 34 and the second heat exchanger 35 are arranged in series in the heat medium circuit HC. The first heat exchanger 34 and the second heat exchanger 35 are configured to cause the refrigerant flowing through the respective refrigerant flow paths RP (the refrigerant circuits RC) and the heat medium flowing through the heat medium flow paths HP (the heat medium circuit HC) to exchange heat with each other.

The heat exchanger unit 30 also includes, as devices forming the heat medium circuit HC, the plurality of heat medium pipes (heat medium pipes Ha, Hb, Hc, Hd) and the pump 36.

The heat medium pipe Ha has one end connected to the first heat medium connection pipe H1 and another end connected to a suction-side port of the pump 36. The heat medium pipe Hb has one end connected to a discharge-side port of the pump 36 and another end connected to one end of the heat medium flow path HP of the first heat exchanger 34. The heat medium pipe Hc has one end connected to another end of the heat medium flow path HP of the first heat exchanger 34 and another end connected to one end of the heat medium flow path HP of the second heat exchanger 35. The heat medium pipe Hd has one end connected to another end of the heat medium flow path HP of the second heat exchanger 35 and another end connected to the second heat medium connection pipe H2. Actually, each of the heat medium pipes (Ha to Hd) may include a single pipe or a plurality of pipes connected to each other via joints or the like.

The pump 36 is disposed in the heat medium circuit HC. The pump 36 draws in and discharges the heat medium during operation. The pump 36 includes a motor that is a drive source, and the motor is inverter controlled to thereby adjust the number of rotations of the pump 36. In other words, the pump 36 is a variable discharge flow rate pump. The heat exchanger unit 30 may include a plurality of pumps 36 connected in series or parallel in the heat medium circuit HC. The pump 36 may be, for example, a constant rate pump.

The heat exchanger unit 30 includes a plurality of heat exchanger unit sensors S2 (see FIG. 12) for detection of states (mainly, a pressure or a temperature) of the refrigerant in the refrigerant circuit RC. The heat exchanger unit sensors S2 include pressure sensors or temperature sensors such as thermistors or thermocouples. The heat exchanger unit sensors S2 include sixth temperature sensors 41 that detect temperatures of the refrigerant on liquid sides (in the refrigerant pipes Pb) of the heat exchangers 33 (the refrigerant flow paths RP) and seventh temperature sensors 42 that detect temperatures of the refrigerant on gas sides (in the refrigerant pipes Pc) of the heat exchangers 33 (the refrigerant flow paths RP), for example. The heat exchanger unit sensors S2 also include third pressure sensors 43 that detect pressures of the refrigerant on the liquid sides (in the refrigerant pipes Pb) of the heat exchangers 33 (the refrigerant flow paths RP) and fourth pressure sensors 44 that detect pressures of the refrigerant on the gas sides (in the refrigerant pipes Pc) of the heat exchangers 33 (the refrigerant flow paths RP), for example.

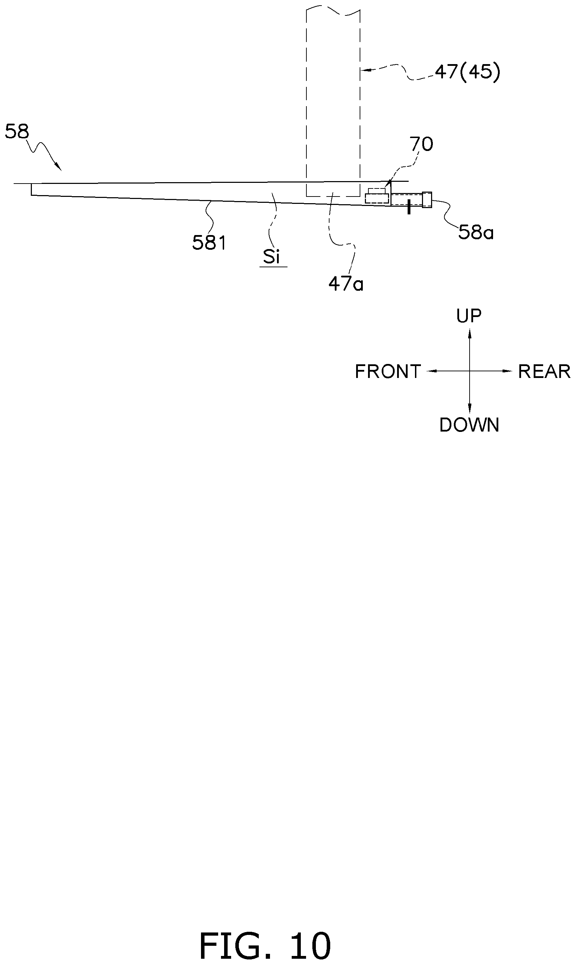

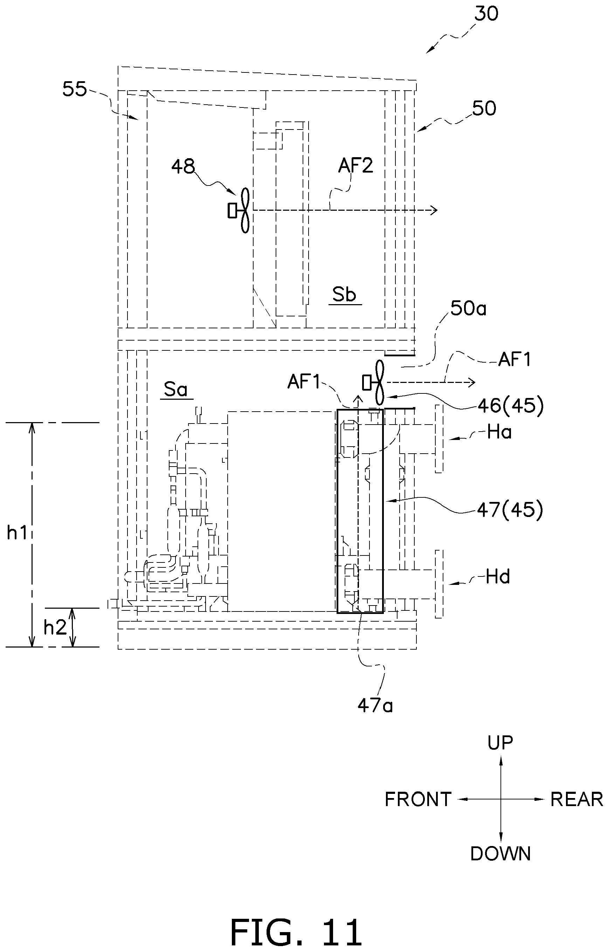

The heat exchanger unit 30 also includes an exhaust fan unit 45 for discharge of a leaking refrigerant from the heat exchanger unit 30 (the refrigerant circuits RC) when a refrigerant leak occurs in the heat exchanger unit 30. The exhaust fan unit 45 includes an exhaust fan 46 (corresponding to a "first fan" or a "second fan" described in the claims). The exhaust fan 46 is driven in synchronization with a drive source (e. g., a fan motor). The exhaust fan 46, when it is driven, generates a first air flow AF1 flowing from inside to outside (here, the facility device room R described later) of the heat exchanger unit 30. The type of the exhaust fan 46 is not limited and examples of the exhaust fan 46 include a sirocco fan and a propeller fan. The exhaust fan unit 45 also includes a flow path forming member 47 forming a flow path for the first air flow AF1 (see FIG. 11). The flow path forming member 47 is not limited insofar as it is a member forming an air flow path for the first air flow AF1, but is a duct, hose, or the like, for example. A suction hole 47a (see FIGS. 10, 11) for the first air flow AF1 is formed in the flow path forming member 47.

Further, the heat exchanger unit 30 has a cooling fan 48 (corresponding to the "first fan" described in the claims). The cooling fan 48 is driven in synchronization with a drive source (e. g., a fan motor). The cooling fan 48, when it is driven, generates a second air flow AF2 for cooling electric components (heat generating components) disposed in the heat exchanger unit 30. The cooling fan 48 is disposed such that the second air flow AF2 exchanges heat with the heat generating components while flowing around the heat generating components, and then flows from inside of the heat exchanger unit 30 to outside (here, the facility device room R). The type of the cooling fan 48 is not limited and examples of the cooling fan 48 include a sirocco fan and a propeller fan.

The heat exchanger unit 30 also has the heat exchanger unit control unit 49 that controls operations and states of the respective devices included in the heat exchanger unit 30. The heat exchanger unit control unit 49 includes, in order to perform its functions, a microcomputer having a microprocessor and a memory chip on which programs performed by the microprocessor are stored, various kinds of electric components, and the like. The heat exchanger unit control unit 49 is electrically connected to the respective devices (e. g., the devices 31, 32, 36, 46, and 48) and the heat exchanger unit sensors S2 included in the heat exchanger unit 30 to exchange signals with the devices and the heat exchanger unit sensors S2. The heat exchanger unit control unit 49 is electrically connected to the heat-source-side unit control unit 29, a control unit (not illustrated) or a remote controller (not illustrated) disposed in each of the use-side units 60, or the like, via communication lines to exchange control signals with the heat-source-side unit control unit 29, the control unit, the remote controller, or the like. The second air flow AF2 generated by the cooling fan 48 cools the electric components included in the heat exchanger unit control unit 49.

### (2-3) Use-side unit 60

The use-side units 60 are facilities that utilize a heat medium cooled or heated by the heat exchanger unit 30. Each of the use-side units 60 is connected to the heat exchanger unit 30 via the first heat medium connection pipe HI, the second heat medium connection pipe H2, and the like. The use-side units 60 form the heat medium circuit HC together with the heat exchanger unit 30.

In the embodiment, each of the use-side units 60 is an air handling unit or a fan coil unit that performs air conditioning by causing the heat medium cooled or heated by the heat exchanger unit 30 and air to exchange heat with each other.

In FIG. 1, only one of the use-side units 60 is shown. However, the heat load processing system 100 may include a plurality of use-side units, and the heat medium cooled or heated by the heat exchanger unit 30 may be divided and sent to the plurality of use-side units. If the heat load processing system 100 includes the plurality of use-side units, all the plurality of use-side units may be of the same kind, for example, or the plurality of use-side units may include a plurality of kinds of facilities.

### (2-4) Liquid-side connection pipe LP, gas-side connection pipe GP

Each of the liquid-side connection pipes LP and each of the gas-side connection pipes GP connect the heat exchanger unit 30 and the corresponding heat-source-side unit 10 to form a flow path for the refrigerant. The liquid-side connection pipes LP and the gas-side connection pipes GP are constructed at an installation site. Actually, each of the liquid-side connection pipes LP or each of the gas-side connection pipes GP may include a single pipe or a plurality of pipes connected to each other via joints or the like.

### (2-5) First heat medium connection pipe HI, second heat medium connection pipe H2

The first heat medium connection pipe H1 and the second heat medium connection pipe H2 connect the heat exchanger unit 30 and the corresponding use-side unit 60 to form a flow path for the heat medium. The first heat medium connection pipe H1 and the second heat medium connection pipe H2 are constructed at the installation site. Actually, the first heat medium connection pipe H1 or the second heat medium connection pipe H2 may include a single pipe or a plurality of pipes connected to each other via joints or the like.

### (2-6) Refrigerant leak sensor 70

The refrigerant leak sensor 70 is a sensor for detection of the refrigerant leak in a space (here, the facility device room R described later) where the heat exchanger unit 30 is disposed. Specifically, the refrigerant leak sensor 70 detects the leaking refrigerant in the heat exchanger unit 30. In the embodiment, a known general-purpose product is used as the refrigerant leak sensor 70 in accordance with the type of the refrigerant filled in the refrigerant circuits RC. The refrigerant leak sensor 70 is disposed in the space where the heat exchanger unit 30 is disposed. In the embodiment, the refrigerant leak sensor 70 is disposed in the heat exchanger unit 30.

The refrigerant leak sensor 70 continuously or intermittently outputs electric signals (refrigerant leak sensor detection signals) corresponding to detection values to the controller 80. More specifically, the refrigerant leak sensor detection signal output from the refrigerant leak sensor 70 changes in voltage in accordance with a concentration of the refrigerant detected by the refrigerant leak sensor 70. In other words, the refrigerant leak sensor detection signal is output to the controller 80 in such a manner that it is possible to identify the concentration of the leaking refrigerant in the space where the refrigerant leak sensor 70 is disposed (more specifically, the concentration of the refrigerant detected by the refrigerant leak sensor 70) in addition to presence or absence of the refrigerant leak in the refrigerant circuits RC. In other words, the refrigerant leak sensor 70 corresponds to "a refrigerant leak detection unit" that detects the leaking refrigerant in the heat exchanger unit 30 (the facility device room R) by directly detecting the refrigerant (more specifically, the concentration of the refrigerant) flowing out of the refrigerant circuit RC.

### (2-7) Controller 80

The controller 80 is a computer that controls an operation of the heat load processing system 100 by controlling states of the respective devices. In the embodiment, the heat-source-side unit control unit 29, the heat exchanger unit control unit 49, and devices (e. g., the control unit or the remote controller disposed in each of the use-side units) connected to the control units configure the controller 80 by being connected to each other via communication lines. In other words, in the embodiment, the controller 80 is implemented by the heat-source-side unit control unit 29, the heat exchanger unit control unit 49, and the devices connected to the control units cooperating with each other. The controller 80 will be described in detail later.

### (3) Flows of refrigerant and heat medium during operation

Next, a description will be given of flows of the refrigerant in each of the refrigerant circuits RC and the heat medium in the heat medium circuit HC. The heat load processing system 100 mainly performs the forward cycle operation and the reverse cycle operation. In the forward cycle operation, the refrigerant circulating through each of the refrigerant circuits RC cools the heat medium circulating through the heat medium circuit HC, and the cooled heat medium cools an object to be cooled (a heat load). In the reverse cycle operation, the refrigerant circulating through each of the refrigerant circuits RC heats the heat medium circulating through the heat medium circuit HC, and the heated heat medium heats an object to be heated (a heat load). In each of the operations, the heat-source-side unit(s) 10 to operate is(are) appropriately selected in accordance with the heat load(s). In each of the operations, the numbers of rotations of the compressor 11 and the heat-source-side fan 20 of the operating heat-source-side unit 10 and the pump 36 of the heat exchanger unit 30 are appropriately adjusted.

### (3-1) Flow during forward cycle operation

During the forward cycle operation, the four-way switching valve 13 is controlled in the forward cycle state. When the forward cycle operation starts, in the operating heat-source-side unit 10 (the refrigerant circuit RC), the compressor 11 suctions, compresses, and then discharges the refrigerant. The gas refrigerant discharged from the compressor 11 flows into the heat-source-side heat exchanger 14.

The gas refrigerant having flowed into the heat-source-side heat exchanger 14 condenses (or radiates heat) as a result of heat exchange with the heat-source-side air flow supplied by the heat-source-side fan 20 in the heat-source-side heat exchanger 14. The refrigerant having flowed out of the heat-source-side heat exchanger 14 is divided while flowing through the sixth pipe P6.

A branch of the refrigerant divided during flowing through the sixth pipe P6 flows into the heat-source-side first control valve 16 where the refrigerant is decompressed or a flow rate of the refrigerant is adjusted in accordance with an opening degree of the heat-source-side first control valve 16, and then flows into the main flow path 151 of the subcooler 15. The refrigerant having flowed into the main flow path 151 of the subcooler 15 is further cooled and turns into the liquid refrigerant in a subcooled state as a result of heat exchange with the refrigerant flowing through the sub flow path 152. The liquid refrigerant having flowed out of the main flow path 151 of the subcooler 15 flows out of the heat-source-side unit 10, and flows into the heat exchanger unit 30 via the liquid-side connection pipe LP.

Another branch of the refrigerant divided during flowing through the sixth pipe P6 flows into the heat-source-side second control valve 17 where the refrigerant is decompressed or a flow rate of the refrigerant is adjusted in accordance with an opening degree of the heat-source-side second control valve 17, and then flows into the sub flow path 152 of the subcooler 15. The refrigerant having flowed into the sub flow path 152 of the subcooler 15 exchanges heat with the refrigerant flowing through the main flow path 151, and is then injected into the compressor 11 via the eleventh pipe P11.

The refrigerant having flowed into the heat exchanger unit 30 flows into the expansion valve 31 via the corresponding refrigerant pipe Pa where the refrigerant is decompressed to a low pressure in the refrigeration cycle in accordance with an opening degree of the expansion valve 31, and then flows into the corresponding refrigerant flow path RP of the heat exchanger 33. The refrigerant having flowed into the refrigerant flow path RP of the heat exchanger 33 evaporates as a result of heat exchange with the heat medium flowing through the heat medium flow path HP, and flows out of the heat exchanger 33. The refrigerant having flowed out of the heat exchanger 33 flows out of the heat exchanger unit 30 via the refrigerant pipes Pc and Pd and the like.

The refrigerant having flowed out of the heat exchanger unit 30 flows into the heat-source-side unit 10 via the gas-side connection pipe GP. The refrigerant having flowed into the heat-source-side unit 10 flows into the accumulator 12 via the first pipe P1, the second pipe P2, and the like. The refrigerant having flowed into the accumulator 12 is temporarily stored in the accumulator 12, and then is suctioned into the compressor 11 again.

In the heat medium circuit HC, the pump 36 sends the heat medium from the first heat medium connection pipe H1 into the heat medium flow paths HP of the heat exchangers 33. The heat medium sent to the heat medium flow paths HP is cooled as a result of heat exchange with the refrigerant flowing through the refrigerant flow paths RP, and flows out of the heat exchangers 33. The heat medium having flowed out of the heat exchangers 33 flows out of the heat exchanger unit 30 via the heat medium pipe Hd and the like.

The heat medium having flowed out of the heat exchanger unit 30 is sent to the operating use-side unit(s) 60 via the second heat medium connection pipe H2 and the like. The heat medium sent to each of the use-side units 60 is heated as a result of heat exchange with a predetermined object to be cooled (here, air in a living space SP described later), and flows out of the use-side unit 60. The heat medium having flowed out of the use-side unit 60 flows into the heat exchanger unit 30 again via the first heat medium connection pipe H1 and the like.

### (3-2) Flows during reverse cycle operation

During the reverse cycle operation, the four-way switching valve 13 is controlled in the reverse cycle state. When the reverse cycle operation starts, in the operating heat-source-side unit 10 (the refrigerant circuit RC), the compressor 11 suctions in, compresses, and then discharges the refrigerant. The gas refrigerant discharged from the compressor 11 flows out of the heat-source-side unit 10 via the fourth pipe P4, the first pipe P1, and the like.

The refrigerant having flowed out of the heat-source-side unit 10 flows into the heat exchanger unit 30 via the gas-side connection pipe GP. The refrigerant having flowed into the heat exchanger unit 30 flows into the corresponding refrigerant flow path RP of the heat exchanger 33 via the corresponding refrigerant pipes Pd, Pc, and the like. The refrigerant having flowed into the refrigerant flow path RP of the heat exchanger 33 condenses (or radiates heat) as a result of heat exchange with the heat medium flowing through the heat medium flow path HP, and flows out of the heat exchanger 33.

The refrigerant having flowed out of the heat exchanger 33 flows, via the refrigerant pipe Pb and the like, into the expansion valve 31 where the refrigerant is decompressed to a low pressure in the refrigeration cycle in accordance with an opening degree of the expansion valve 31, and then flows out of the heat exchanger unit 30 via the refrigerant pipe Pa and the like.

The refrigerant having flowed out of the heat exchanger unit 30 flows into the heat-source-side unit 10 via the liquid-side connection pipe LP and the like. The refrigerant having flowed into the heat-source-side unit 10 flows through the seventh pipe P7, the sixth pipe P6, and the like, and flows into the heat-source-side heat exchanger 14. The refrigerant having flowed into the heat-source-side heat exchanger 14 evaporates in the heat-source-side heat exchanger 14 as a result of heat exchange with the heat-source-side air flow sent by the heat-source-side fan 20, and flows out of the heat-source-side heat exchanger 14.

The refrigerant having flowed out of the heat-source-side heat exchanger 14 flows into the accumulator 12 via the fifth pipe P5, the second pipe P2, and the like. The refrigerant having flowed into the accumulator 12 is temporarily stored in the accumulator 12, and then is suctioned into the compressor 11 again.

In the heat medium circuit HC, the pump 36 sends the heat medium from the first heat medium connection pipe H1 into the heat medium flow paths HP of the heat exchangers 33. The heat medium sent into the heat medium flow paths HP is heated as a result of heat exchange with the refrigerant flowing through the refrigerant flow paths RP, and flows out of the heat exchangers 33. The heat medium having flowed out of the heat exchangers 33 flows out of the heat exchanger unit 30 via the heat medium pipe Hd and the like.

The heat medium having flowed out of the heat exchanger unit 30 is sent to the operating use-side unit(s) 60 via the second heat medium connection pipe H2 and the like. The heat medium sent to the use-side unit 60 is cooled as a result of heat exchange with an object to be heated (here, air in the living space SP described later), and flows out of the use-side unit 60. The heat medium having flowed out of the use-side unit 60 flows into the heat exchanger unit 30 again via the first heat medium connection pipe H1 and the like.

### (4) Manner of installation of heat load processing system 100

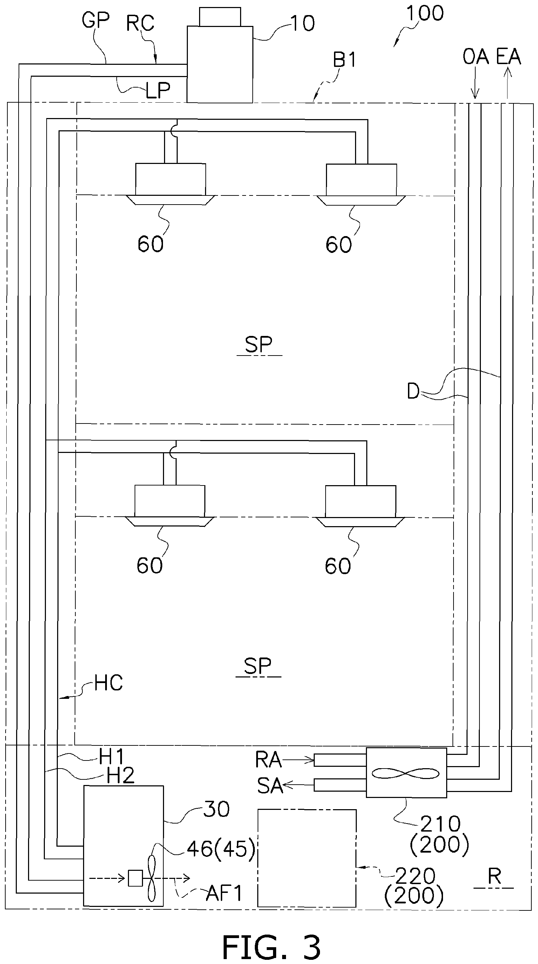

FIG. 3 is a diagrammatic illustration showing a manner of installation of the heat load processing system 100. An installation place of the heat load processing system 100 is not limited and may be a building, a commercial facility, a factory, or the like, for example. In the embodiment, the heat load processing system 100 is installed in the manner shown in FIG. 3 in a building B1. The building B1 has a plurality of floors. The number of floors, the number of rooms, and the like of the building B1 can be changed as appropriate.

The facility device room R is provided in the building B1. The facility device room R is a space where electric facilities such as a switchboard and a power generator or a cold energy device such as a boiler are disposed. The facility device room R is a space into and out of which people can come and in which people can stay. For example, the facility device room R is a space such as a basement room where people can walk. In the embodiment, the facility device room R is positioned on a lowermost floor of the building B1. The building B1 is also provided with the living spaces SP where people do activities. The building B1 is provided with the plurality of living spaces SP. In the embodiment, the living spaces SP are positioned on a floor above the floor provided with the facility device room R.

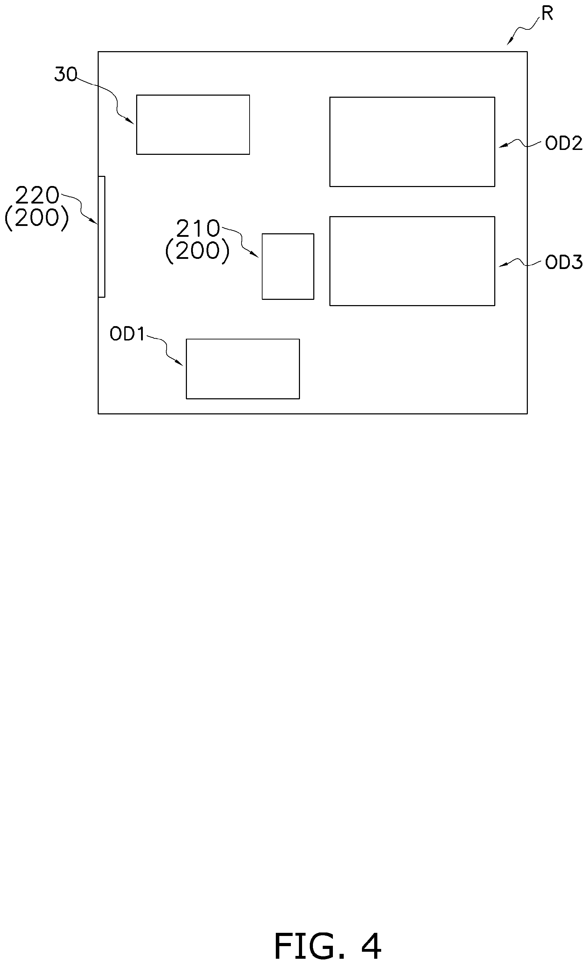

In FIG. 3, the heat-source-side units 10 are installed on a rooftop of the building B1. The heat exchanger unit 30 is installed in the facility device room R. In relation to this, the liquid-side connection pipes LP and the gas-side connection pipes GP extend along a vertical direction between the rooftop and the facility device room R. To put it more concretely, in the facility device room R, as shown in FIG. 4, the heat exchanger unit 30 is installed together with other devices (devices OD1 to OD3). The devices OD1 to OD3 are not limited and may be a boiler, a power generator, a switchboard, and the like, for example. It is also possible that only the heat exchanger unit 30 is installed in the facility device room R.

In FIG. 3, the respective use-side units 60 are disposed in the corresponding living spaces SP. In relation to this, the first heat medium connection pipe H1 and the second heat medium connection pipe H2 extend along the vertical direction between the living spaces SP and the facility device room R.

In the building B1, ventilators 200 that provide ventilation (forced ventilation or natural ventilation) of the facility device room R are provided. The respective ventilators 200 are installed in the facility device room R. Specifically, in the facility device room R, a ventilation fan 210 is installed as the ventilator 200. The ventilation fan 210 is connected to a plurality of ventilation ducts D. The ventilation fan 210, when it is driven, exhausts air (room air RA) in the facility device room R to an outside space as exhaust air EA, and supplies air (outside air OA) in the outside space into the facility device room R as supplied air SA to thereby provide the ventilation of the facility device room R. In other words, the ventilation fan 210 corresponds to "the ventilator" that provides the ventilation in the facility device room R. The ventilation fan 210 is electrically connected to the controller 80 via an adaptor 80a (see FIG. 12). The controller 80 can control an operation (a start and a stop and the number of rotations) of the ventilation fan 210. The control of the ventilation fan 210 appropriately switches between an intermittent operating mode in which the ventilation fan 210 operates intermittently and a continuous operating mode in which the ventilation fan 210 operates continuously.

In the facility device room R, an opening and closing mechanism 220 is installed as the ventilator 200. The opening and closing mechanism 220 is a mechanism switchable between an open state for communicating between the facility device room R and another space (e. g., the outside space) and a closed state for interrupting between the facility device room R and another space from each other. In other words, the opening and closing mechanism 220 opens and closes an opening that communicates between the facility device room R and another space. For example, the opening and closing mechanism 220 is a door, a hatch, a window, a shutter, or the like opening and closing of which is controllable. The opening and closing mechanism 220 is electrically connected to the controller 80 via an adaptor 80b (see FIG. 12). The controller 80 controls the state (the open state or the closed state) of the ventilation fan 210.

### (5) Manner of configuration of heat exchanger unit 30

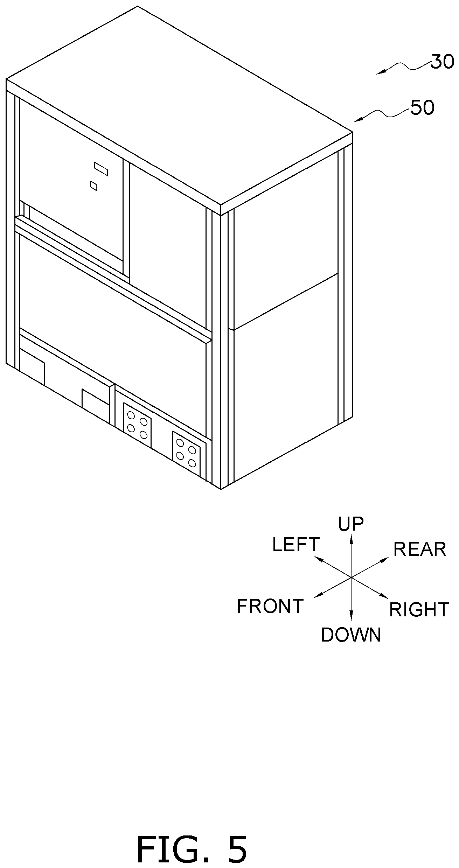

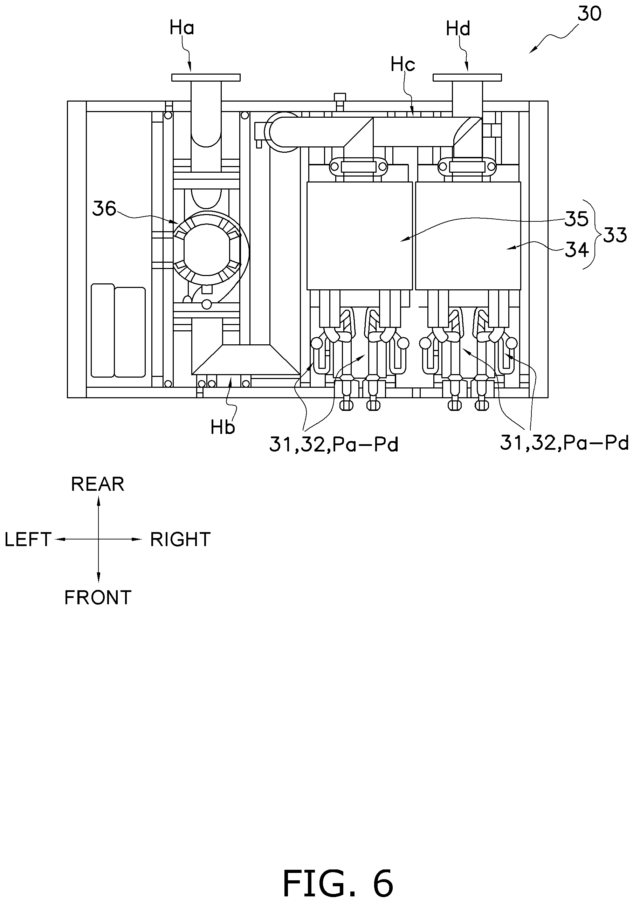

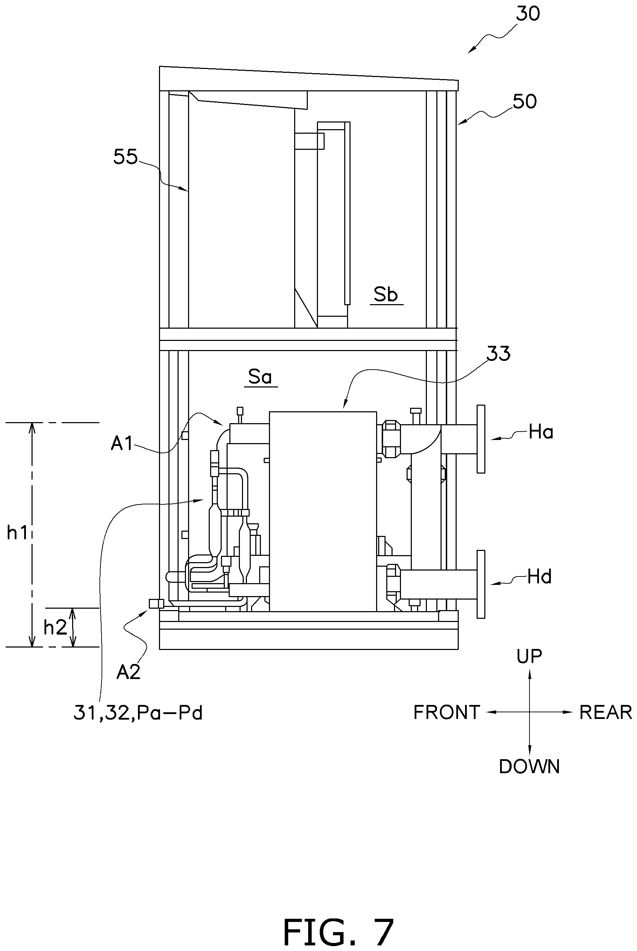

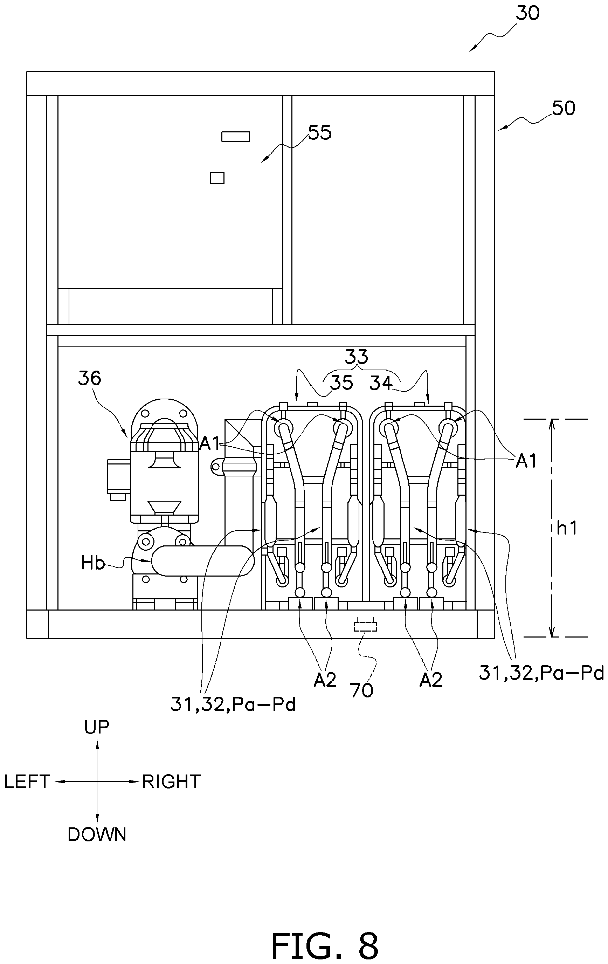

FIG. 5 is a perspective view of the heat exchanger unit 30. The heat exchanger unit 30 has a casing 50 that houses the respective devices. FIG. 6 is a diagrammatic illustration showing a manner of disposition of the devices in the casing 50 in a plan view. FIG. 7 is a diagrammatic illustration showing the manner of disposition of the devices in the casing 50 in a side view. FIG. 8 is a diagrammatic illustration showing the manner of disposition of the devices in the casing 50 in a front view.

The casing 50 has a substantially rectangular parallelepiped shape. The casing 50 is installed by use of installation legs, a mount, or the like. The casing 50 includes a lower space Sa and an upper space Sb formed inside itself. The lower space Sa and the upper space Sb are not completely separate from each other and partially communicate with each other.

In the lower space Sa, the respective expansion valves 31, the respective on-off valves 32, the heat exchangers 33, the pump 36, the respective refrigerant pipes Pa to Pd, the heat medium pipes Ha to Hd, and the heat exchanger unit sensors S2 are disposed. In the embodiment, as shown in FIG. 6, in the lower space Sa, the first heat exchanger 34, the second heat exchanger 35, and the pump 36 are disposed in this order from the right to the left. In front of the heat exchangers 33, the respective expansion valves 31, the respective on-off valves 32, and the respective refrigerant pipes Pa to Pd are arranged systematically to correspond to positions of the refrigerant flow paths RP with which the valves 31 and 32 and the pipes Pa to Pd communicate, respectively. Behind the pump 36, the heat medium pipe Ha is disposed. The heat medium pipe Hb extends from a front side of the pump 36 toward a rear side of the second heat exchanger 35. The heat medium pipes Hc and Hd are disposed behind the heat exchangers 33.

In FIGS. 7 and 8, a portion shown by a reference sign "A1" is a highest portion (hereinafter referred to as "uppermost portion A1") of the respective refrigerant pipes Pa to Pd disposed in the heat exchanger unit 30. The uppermost portion A1 is positioned at a height corresponding to a vertical length h1 from a bottom portion of the casing 50.

In FIGS. 7 and 8, a portion shown by a reference sign "A2" is a lowest portion (hereinafter referred to as "lowermost portion A2") of the respective refrigerant pipes Pa to Pd in the heat exchanger unit 30. The lowermost portion A2 is positioned at a height corresponding to a vertical length h2 from the bottom portion of the casing 50. The lowermost portion A2 is positioned at a height corresponding to the vertical length h2 from the bottom portion of the casing 50.

The upper space Sb is a space positioned above the lower space Sa. In the upper space Sb, an electric component box 55 to house therein the heat exchanger unit control unit 49 is disposed.

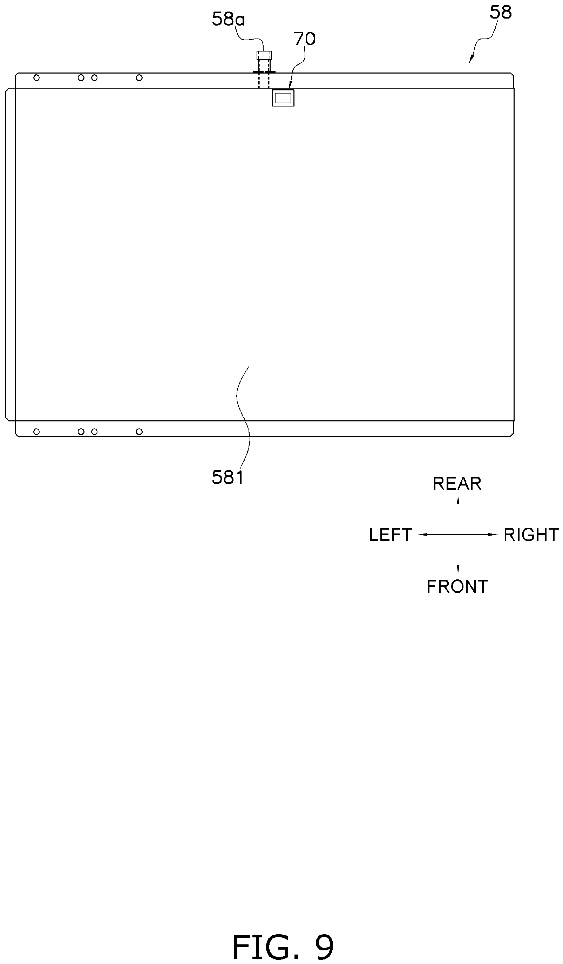

The casing 50 has a bottom plate 58 shown in FIGS. 9 and 10. FIG. 9 is a diagrammatic illustration of the bottom plate 58 in a plan view. FIG. 10 is a diagrammatic illustration of the bottom plate 58 in a side view.

The bottom plate 58 is a member forming the bottom portion of the casing 50. The bottom plate 58 is one of members forming the lower space Sa. The bottom plate 58 is disposed below the heat exchangers 33. The bottom plate 58 also functions as a drain pan that receives condensed water dropping from the heat exchangers 33. The bottom plate 58 has a substantially rectangular bottom face portion 581 in the plan view. The bottom plate 58 has a discharge port 58a formed to discharge the water received by the bottom face portion 581. The discharge port 58a is disposed near a center of one side of the bottom face portion 581 in the plan view (see FIG. 9). The bottom face portion 581 is inclined in such a manner as to form a descending slope toward the discharge port 58a. In relation to this, the bottom plate 58 has a depth increasing toward the discharge port 58a. In other words, in the bottom plate 58, a space (a bottom plate immediate upper space Si) deepening toward the discharge port 58a is formed above the bottom face portion 581.

The refrigerant leak sensor 70 is disposed above the bottom face portion 581 of the bottom plate 58. In other words, the refrigerant leak sensor 70 is disposed in the bottom plate immediate upper space Si. To put it more specifically, the refrigerant leak sensor 70 is disposed near the discharge port 58a. In other words, the refrigerant leak sensor 70 is disposed at a position where the bottom plate immediate upper space Si becomes deep.

FIG. 11 is a diagrammatic illustration schematically showing a manner of disposition of the exhaust fan unit 45 and the cooling fan 48 in the casing 50. The casing 50 has a discharge hole 50a formed to discharge the first air flow AF1 generated by the exhaust fan 46. The discharge hole 50a discharges the first air flow AF1 to outside from the heat exchanger unit 30. The discharge hole 50a is positioned neat an upper end of the lower space Sa. To put it more concretely, the discharge hole 50a is disposed at a higher position than the height h1. In other words, the discharge hole 50a is formed at the higher position than the uppermost portion A1 (the highest portion of the refrigerant pipes housed in the heat exchanger unit 30). The discharge hole 50a communicates with a secondary side (a blowout side) of the exhaust fan 46.

The casing 50 houses the exhaust fan unit 45 disposed in the lower space Sa. The exhaust fan unit 45 is disposed in such a manner as to take in the first air flow AF1 from the bottom plate immediate upper space Si and discharge it from the discharge hole 50a in the lower space Sa. To put it more concretely, the flow path forming member 47 of the exhaust fan unit 45 is disposed to extend from the bottom plate immediate upper space Si along the vertical direction.

One end of the flow path forming member 47 is an opening and functions as the suction hole (hereinafter referred to as "suction hole 47a") for drawing in the first air flow AF1. The suction hole 47a is disposed at a lower position than the height h1 (see FIG. 11). In other words, the suction hole 47a for the first air flow AF1 is formed at the lower position than the uppermost portion A1 (the highest portion of the refrigerant pipes housed in the heat exchanger unit 30). The suction hole 47a is formed at the lower position than the lowermost portion A2 (the lowest portion of the refrigerant pipes housed in the heat exchanger unit 30). To put it more specifically, the suction hole 47a is disposed in the bottom plate immediate upper space Si (see FIG. 10). In other words, the suction hole 47a is formed in the space in the bottom plate 58 (a drain pan). From a different perspective, the suction hole 47a can be regarded as being disposed in the bottom plate 58.

Another end of the flow path forming member 47 is an opening and communicates with a primary side (a suction side) of the exhaust fan 46. Another end of the flow path forming member 47 is at a higher position than the height h1. In other words, another end of the flow path forming member 47 is formed at the higher position than the uppermost portion A1 (the highest portion of the refrigerant pipes housed in the heat exchanger unit 30).

The exhaust fan 46 is disposed near the discharge hole 50a. The exhaust fan 46 is at a higher position than the height h1. In other words, the exhaust fan 46 is formed at the higher position than the uppermost portion A1 (the highest portion of the refrigerant pipes housed in the heat exchanger unit 30). The exhaust fan 46 is disposed near the heat medium pipes Ha to Hd in the lower space Sa. This reduces flowing of the leaking refrigerant into the living spaces SP via the heat medium pipes Ha to Hd when a refrigerant leak occurs in the heat exchanger unit 30.

The casing 50 houses the cooling fan 48 disposed in the upper space Sb. The cooling fan 48 is disposed in the upper space Sb such that the second air flow AF2 flows around the heat generating components included in the heat exchanger unit control unit 49, and then flows to outside (here, the facility device room R). The cooling fan 48 is disposed near the heat exchanger unit control unit 49 housed in the electric component box 55. In the embodiment, the cooling fan 48 is disposed at a higher position than the height h1. In other words, the cooling fan 48 is disposed at the higher position than the exhaust fan 46.

### (6) Details of controller 80

In the heat load processing system 100, the heat-source-side unit control unit 29 and the heat exchanger unit control unit 49 are connected via a communication line to thereby configure the controller 80. FIG. 12 is a block diagram schematically showing the controller 80 and components connected to the controller 80.

The controller 80 has a plurality of control modes and controls operations of the respective devices in accordance with a control mode in which the controller 80 is to be placed. In the embodiment, the controller 80 includes, as the control modes, a normal operating mode in which the controller 80 is placed during operation (when no refrigerant leak has occurred) and a refrigerant leak mode in which the controller 80 is placed when a refrigerant leak has occurred (more specifically, when a leaking refrigerant is detected).

The controller 80 is electrically connected to the devices included in the heat load processing system 100, e. g., the compressor 11, the four-way switching valve 13, the heat-source-side first control valve 16, the heat-source-side second control valve 17, the heat-source-side fan 20, and the heat-source-side sensors S1 included in each of the heat-source-side units 10, the devices included in the heat exchanger unit 30 (concretely, the respective expansion valves 31, the respective on-off valves 32, the pump 36, the exhaust fan 46, the cooling fan 48, and the heat exchanger unit sensors S2), and the refrigerant leak sensor 70. The controller 80 is also electrically connected to the ventilators 200 disposed in the facility device room R. To put it more concretely, the controller 80 is electrically connected to the ventilation fan 210 via the adaptor 80a and connected to the opening and closing mechanism 220 via the adaptor 80b. The controller 80 is also electrically connected to an output device 300 capable of outputting predetermined information (e. g., a display capable of outputting displayed information and a speaker capable of outputting sound information).

The controller 80 mainly includes a storage unit 81, an input control unit 82, a mode control unit 83, a refrigerant leak determination unit 84, a device control unit 85, a drive signal output unit 86, and an information output control unit 87. These functional units in the controller 80 are implemented by a CPU, a memory, and various electric and electronic components included in the heat-source-side unit control unit 29 and/or the heat exchanger unit control unit 49 cooperating with each other.

### (6-1) Storage unit 81

The storage unit 81 includes, for example, a read only memory (ROM), a random access memory (RAM), and a flash memory. The storage unit 81 has a volatile storage region and a nonvolatile storage region. The storage unit 81 has a program storage region M1 in which a control program that defines processing to be performed by each unit of the controller 80 is stored.

The storage unit 81 has a detection value storage region M2 in which detection values of the respective sensors are stored. The detection value storage region M2 stores the detection values (a suction pressure, a discharge pressure, a suction temperature, a discharge temperature, a temperature and a pressure of a refrigerant flowing into the heat exchangers 33, or a temperature and a pressure of a refrigerant flowing out of the heat exchangers 33, and the like) of the respective heat-source-side sensors S1 and the respective heat exchanger unit sensors S2, for example.

The storage unit 81 has a sensor signal storage region M3 in which the refrigerant leak sensor detection signal sent from the refrigerant leak sensor 70 (a detection value of the refrigerant leak sensor 70) is stored. The refrigerant leak signal stored in the sensor signal storage region M3 is updated every time the refrigerant leak signal output from the refrigerant leak sensor 70 is received.

The storage unit 81 has a command storage region M4 in which a command input by a user via an input device (not illustrated) is stored.

In addition, the storage unit 81 is provided with a plurality of flags having predetermined numbers of bits. For example, the storage unit 81 is provided with a control mode determination flag M5 based on which the control mode in which the controller 80 is placed can be determined. The control mode determination flag M5 includes the bits corresponding in number to the control modes and the bits corresponding to the control mode in which the controller 80 is placed are set.

The storage unit 81 is provided with a refrigerant leak detection flag M6 based on which it is possible to determine that a refrigerant leak has been detected in the heat exchanger unit 30. The refrigerant leak detection flag M6 is configured to make it possible to determine that the refrigerant leak has occurred when the refrigerant leak has occurred in any of refrigerant circuits RC. The refrigerant leak determination unit 84 switches the refrigerant leak detection flag M6.

### (6-2) Input control unit 82

The input control unit 82 is a functional unit that plays a role as an interface for receiving signals output from the respective devices connected to the controller 80. For example, the input control unit 82 receives the signals output from the respective sensors (S1, S2), the remote controller, and the like, and then stores the signals in the corresponding storage regions in the storage unit 81 or sets the predetermined flag.

### (6-3) Mode control unit 83

The mode control unit 83 is a functional unit that switches the control mode. The mode control unit 83 switches the control mode to the normal operating mode under normal conditions (when the refrigerant leak detection flag M6 is not set). The mode control unit 83 switches the control mode to the refrigerant leak mode when the refrigerant leak detection flag M6 is set. The mode control unit 83 sets the control mode determination flag M5 in accordance with the control mode in which the controller 80 is placed.

### (6-4) Refrigerant leak determination unit 84

The refrigerant leak determination unit 84 is a functional unit that determines whether or not a refrigerant leak has occurred in the refrigerant circuit RC. Specifically, the refrigerant leak determination unit 84 determines that the refrigerant leak has occurred in the refrigerant circuit RC and sets the refrigerant leak detection flag M6 when a predetermined refrigerant leak detection condition is satisfied.

In the embodiment, whether or not the refrigerant leak detection condition is satisfied is determined based on the refrigerant leak sensor detection signal in the sensor signal storage region M3. Specifically, the refrigerant leak detection condition is satisfied if a voltage according to any of the refrigerant leak sensor detection signals (a detection value of the refrigerant leak sensor 70) continues to be higher than or equal to a predetermined first reference value for a predetermined time t1 or longer. The first reference value is a value (a concentration of the refrigerant) with which the refrigerant leak is assumed in the refrigerant circuit RC. The predetermined time t1 is set to such a time that the refrigerant leak sensor detection signal can be determined not to be momentary. The refrigerant leak determination unit 84 sets the refrigerant leak detection flag M6 on the basis of the fact that the refrigerant leak detection condition is satisfied. That is, together with the refrigerant leak sensor 70, the refrigerant leak determination unit 84 corresponds to a "refrigerant leak detection unit" that detects a refrigerant leak in the heat exchanger unit 30 (the facility device room R).

The predetermined time t1 is appropriately set in accordance with the type of the refrigerant filled in the refrigerant circuits RC, specifications of the respective devices, the installation environment, or the like and defined in the control program. The refrigerant leak determination unit 84 is configured to be able to measure the predetermined time t1.

The first reference value is appropriately set in accordance with the type of the refrigerant filled in the refrigerant circuits RC, design specifications, the installation environment, and the like and defined in the control program.

### (6-5) Device control unit 85

The device control unit 85 controls, based on the control program, operations of the respective devices (e. g., the devices 11, 13, 16, 17, 20, 31, 32, 36, 46, and 48) included in the heat load processing system 100, in accordance with a situation. The device control unit 85 also controls states of the ventilators 200 (the ventilation fan 210 and the opening and closing mechanism 220) installed in the facility device room R. The device control unit 85 refers to the control mode determination flag M5, thereby determining a control mode in which the controller 80 is placed, and controls the operations of the respective devices, based on the determined control mode.

In the normal operating mode, for example, the device control unit 85 controls an operating capacity of the compressor 11, the heat-source-side fan 20, opening degrees of the heat-source-side first control valve 16 and the heat-source-side second control valve 17, an opening degree of the expansion valve 31, the number of rotations of the pump 36, and the like in real time, such that the forward cycle operation or the reverse cycle operation is performed in accordance with, for example, set temperatures and detection values of the respective sensors.

The device control unit 85 controls the four-way switching valve 13 in the forward cycle state, causes the heat-source-side heat exchanger 14 to function as the condenser (or the radiator) of the refrigerant, and causes the heat exchangers 33 of the heat exchanger unit 30 to function as the evaporators of the refrigerant during the forward cycle operation. On the other hand, the device control unit 85 controls the four-way switching valve 13 in the reverse cycle state, causes the heat-source-side heat exchanger 14 to function as the evaporator of the refrigerant, and causes the heat exchangers 33 of the heat exchanger unit 30 to function as the condensers (or the radiators) of the refrigerant during the reverse cycle operation.

Moreover, the device control unit 85 performs the following various kinds of controls in accordance with situations. The device control unit 85 is configured to be able to measure times.

### <Refrigerant leak first control>

The device control unit 85 performs a refrigerant leak first control if it is assumed that a refrigerant leak has occurred in the heat exchanger unit 30 (the refrigerant circuits RC) (concretely, when the refrigerant leak detection flag M6 is set). In the refrigerant leak first control, the device control unit 85 controls each expansion valve 31 and each on-off valve 32 of the heat exchanger unit 30 to the closed state. This reduces an inflow of the refrigerant from the heat-source-side unit 10 into the heat exchanger unit 30, and reduces a further refrigerant leak. In other words, the refrigerant leak first control is a control for reducing an outflow of the leaking refrigerant in the heat exchanger unit 30 when the refrigerant leak has occurred. In the refrigerant leak first control, when each expansion valve 31 and each on-off valve 32 are brought into the closed state when a refrigerant leak occurs, an inflow of the refrigerant into the heat exchanger unit 30 is interrupted, and an outflow of the leaking refrigerant in the heat exchanger unit 30 is reduced.

### <Refrigerant leak second control>

When it is assumed that a refrigerant leak has occurred in the heat exchanger unit 30 (the refrigerant circuit RC), the device control unit 85 executes a refrigerant leak second control (corresponding to a "first process" described in the claims). The refrigerant leak second control is a control for causing the fans (the exhaust fan 46 and the cooling fan 48) disposed in the heat exchanger unit 30 to operate with predetermined numbers of rotations in order to prevent a concentration of the leaking refrigerant from becoming locally high in the heat exchanger unit 30. The device control unit 85 causes the exhaust fan 46 of the heat exchanger unit 30 to operate with a predetermined number of rotations (an air flow volume) in the refrigerant leak second control. The device control unit 85 also causes the cooling fan 48 of the heat exchanger unit 30 to operate with a predetermined number of rotations (an air flow volume) in the refrigerant leak second control. In the embodiment, the numbers of rotations of the exhaust fan 46 and the cooling fan 48 in the refrigerant leak second control are set to the maximum numbers of rotations (maximum air flow volumes). In other words, in the refrigerant leak second control, the device control unit 85 causes the exhaust fan 46 or the cooling fan 48 to shift into an operating state if the exhaust fan 46 or the cooling fan 48 is in a stop state, and causes the exhaust fan 46 or the cooling fan 48 to operate with the maximum number of rotations if the exhaust fan 46 or the cooling fan 48 is already in the operating state.

As a result of this refrigerant leak second control, even if the refrigerant leak has occurred in the heat exchanger unit 30, the first air flow AF1 generated by the exhaust fan 46 and the second air flow AF2 generated by the cooling fan 48 stir the leaking refrigerant in the heat exchanger unit 30 or discharge the leaking refrigerant from the heat exchanger unit 30. Consequently, it is possible to reduce the hike in the concentration of the leaking refrigerant in the heat exchanger unit 30.

### <Refrigerant leak third control>

When it is assumed that a refrigerant leak has occurred in the heat exchanger unit 30 (the refrigerant circuit RC), the device control unit 85 executes a refrigerant leak third control (corresponding to the "first process" described in the claims). The refrigerant leak third control is a control of increasing a ventilation air volume by the ventilators 200 in order to prevent a concentration of the leaking refrigerant from becoming locally high in the facility device room R.

The device control unit 85 increases the number of rotations (an air flow volume) of the ventilation fan 210 in the refrigerant leak third control. In the embodiment, the number of rotations of the ventilation fan 210 in the refrigerant leak third control is set to the maximum number of rotations (a maximum air flow volume). In other words, in the refrigerant leak third control, the device control unit 85 causes the ventilation fan 210 to shift into the operating state if the ventilation fan 210 is in a stop state, and causes the ventilation fan 210 to operate with the maximum number of rotations if the ventilation fan 210 is already in the operating state. If the ventilation fan 210 is performing an intermittent operation in an intermittent operation mode, the device control unit 85 performs the refrigerant leak third control to switch the ventilation fan 210 into the continuous operating mode to cause the ventilation fan 210 to perform a continuous operation. Thus, an operating time per unit time of the ventilation fan 210 increases. As a result, the ventilation air volume by the ventilation fan 210 increases to facilitate discharge of the leaking refrigerant to the outside space.

Moreover, the device control unit 85 switches the opening and closing mechanism 220 into the open state in the refrigerant leak third control. Thus, the facility device room R communicates with another space. As a result, part of the leaking refrigerant in the facility device room R flows out into another space, which further prevents the concentration of the leaking refrigerant from becoming locally high in the facility device room R.

### (6-6) Drive signal output unit 86

The drive signal output unit 86 outputs corresponding drive signals (drive voltages) to the respective devices (e. g., the devices 11, 13, 16, 17, 20, 31, 32, 36, 46, and 48) in accordance with details of control by the device control unit 85. The drive signal output unit 86 includes a plurality of inverters (not illustrated) that output the drive signals to specific devices (e. g., the compressor 11, the heat-source-side fan 20, or the pump 36) corresponding thereto.

### (6-7) Information output control unit 87

The information output control unit 87 is a functional unit that controls an operation of the output device 300. The information output control unit 87 causes the output device 300 to output predetermined information in order that information on the operating state or the situation may be output for the user. For example, the information output control unit 87 causes the output device 300 to output information (refrigerant leak notification information) for notifying that the refrigerant leak has occurred if the refrigerant leak detection flag M6 is set. The refrigerant leak notification information is the displayed information such as letters or the sound information such as an alarm. Thus, a manager or the user can grasp the fact that the refrigerant leak has occurred and take a predetermined measure.

### (7) Processing by controller 80

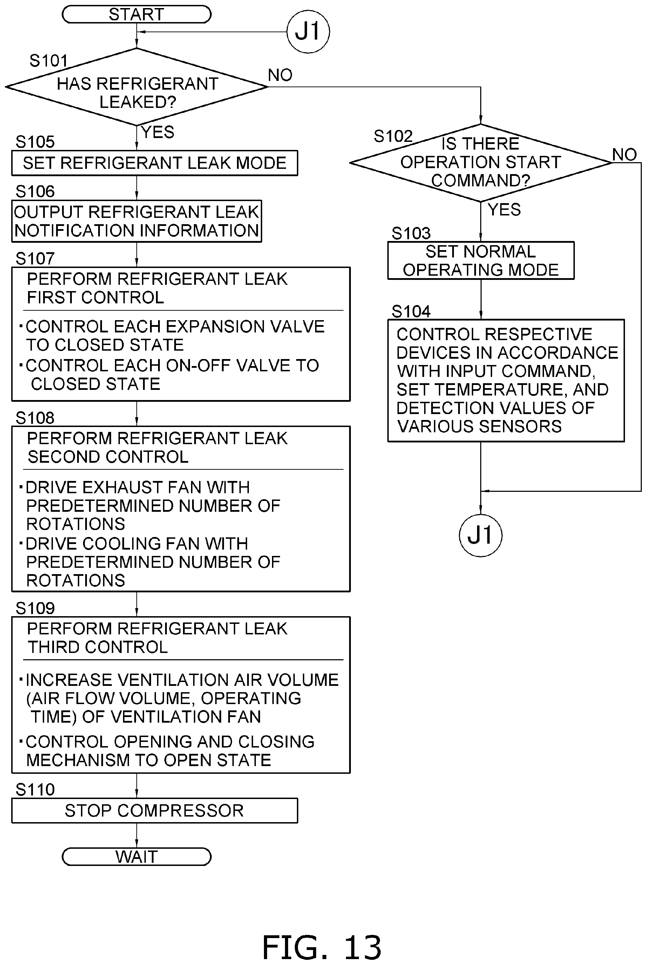

With reference to FIG. 13, next, a description will be given of exemplary processing to be performed by the controller 80. FIG. 13 is a flowchart of the exemplary processing to be performed by the controller 80. When a power source is turned on, the controller 80 sequentially performs steps S101 to S110 illustrated in FIG. 13. The processing in FIG. 13 is merely an example and may be changed as appropriate. For example, the sequence of the steps may be changed, some of the steps may be carried out in parallel, or additional steps may be carried out insofar as there are no inconsistencies.

In step S101, when the controller 80 assumes that a refrigerant leak has occurred in the heat exchanger unit 30 (the refrigerant circuits RC) (YES in S101), the processing proceeds to step S105. When the controller 80 assumes that no refrigerant leak has occurred in the heat exchanger unit 30 (NO in S101), the processing proceeds to step S102.

In step S102, when no command ordering a start of the operation (an operation start command) is input (NO in S102), the processing by the controller 80 returns to step S101. On the other hand, when the operation start command is input (YES in S102), the processing by the controller 80 proceeds to step S103.

In step S103, the controller 80 is placed in the normal operating mode (or kept in the normal operating mode). The processing then proceeds to step S104.

In step S104, the controller 80 controls states of the respective devices in real time in accordance with the input command, the set temperatures, and the detection values of the various sensors (S1, S2, and the like) to thereby cause the heat load processing system 100 to perform the forward cycle operation or the reverse cycle operation. The processing then returns to step S101.

In step S105, the controller 80 is placed in the refrigerant leak mode. The processing by the controller 80 then proceeds to step S106.

In step S106, the controller 80 causes the output device 300 such as the remote controller to output the refrigerant leak notification information. Thus, the manager can grasp the fact that the refrigerant leak has occurred. The processing by the controller 80 then proceeds to step S107.

In step S107, the controller 80 performs the refrigerant leak first control. Specifically, the controller 80 controls each expansion valve 31 and each on-off valve 32 of the heat exchanger unit 30 to the closed state. As a result, a flow of the refrigerant to the heat exchanger unit 30 is obstructed, and a further outflow of the leaking refrigerant is reduced in the heat exchanger unit 30. The processing by the controller 80 then proceeds to step S108.

In step S108, the controller 80 performs the refrigerant leak second control. Specifically, the controller 80 has the exhaust fan 46 and the cooling fan 48 driven with predetermined numbers of rotations (e. g., the maximum numbers of rotations). This, in the heat exchanger unit 30, facilitates stirring or discharge of the leaking refrigerant to thereby reduce a concentration of the leaking refrigerant from locally becoming critically high. The processing by the controller 80 then proceeds to step S109.

In step S109, the controller 80 performs the refrigerant leak third control. Specifically, the controller 80 increases a ventilation air volume (an air flow volume and/or an operating time per unit time) of the ventilation fan 210. As a result, the ventilation air volume by the ventilation fan 210 increases to facilitate discharge of the leaking refrigerant to the outside space. Moreover, the device control unit 85 switches the opening and closing mechanism 220 into the open state in the refrigerant leak third control. As a result, the facility device room R communicates with another space to facilitate discharge of the leaking refrigerant from the facility device room R, which further reduces the concentration of the leaking refrigerant from becoming locally high. The processing by the controller 80 then proceeds to step S110.

In step S110, the controller 80 stops the compressor 11. After that, the controller 80 waits until release by the manager.

### (8) Measures against refrigerant leak in heat load processing system 100

The heat load processing system 100 takes the following measures (i) to (iv) against a refrigerant leak.
(i) In the heat load processing system 100, the expansion valves 31 and the on-off valves 32 switchable between permission and interruption of a flow of the refrigerant from the heat-source-side units 10 to the heat exchanger unit 30 are disposed in the heat exchanger unit 30. Then, when a refrigerant leak occurs in the heat exchanger unit 30, the refrigerant leak first control is executed, and the expansion valve 31 and the on-off valve 32 are switched to the closed state. This, as a result, interrupts the flow of the refrigerant from the heat-source-side unit 10 into the heat exchanger unit 30 to thereby reduce the further refrigerant leak.
(ii) The heat load processing system 100 includes therein the fans (the exhaust fan 46 and the cooling fan 48) disposed to generate the air flows (AF1, AF2) in the heat exchanger unit 30. When a refrigerant leak occurs in the heat exchanger unit 30, the refrigerant leak second control is performed to start the fans or increase the numbers of rotations (the air flow volumes) of the fans. Thus, the leaking refrigerant is stirred in the heat exchanger unit 30. Alternatively, the leaking refrigerant is discharged from the heat exchanger unit 30. As a result, it is possible to prevent increase in the concentration of the leaking refrigerant in the heat exchanger unit 30.
(iii) In the heat load processing system 100, the controller 80 is configured to control the ventilators 200 (the ventilation fan 210, the opening and closing mechanism 220) in the facility device room R where the heat exchanger unit 30 is installed. When a refrigerant leak occurs in the heat exchanger unit 30, the refrigerant leak third control is performed to increase a ventilation air volume by the ventilators 200. Specifically, the ventilation air volume (the air flow volume, the operating time per unit time) of the ventilation fan 210 is increased. Moreover, the opening and closing mechanism 220 is switched into the open state. As a result, the ventilation air volume in the heat exchanger unit 30 increases to facilitate stirring and discharge of the leaking refrigerant in the facility device room R. As a result, it is possible to reduce a hike in a concentration of the leaking refrigerant in the facility device room R.
(iv) In the heat load processing system 100, the suction hole 47a for the first air flow AF1 generated by the exhaust fan 46 is formed at a lower position than the uppermost portion A1 (the highest portion of the refrigerant pipes housed in the heat exchanger unit 30). This facilitates discharge of the refrigerant having a greater specific gravity than air from the heat exchanger unit 30 when such a refrigerant leaks in the heat exchanger unit 30. In other words, when the refrigerant having the greater specific gravity than air leaks in the heat exchanger unit 30, the leaking refrigerant accumulates in the bottom plate immediate upper space Si. However, since the suction hole 47a for the first air flow AF1 is formed at the lower position than the uppermost portion A1, discharge of the leaking refrigerant collecting in the bottom plate immediate upper space Si is facilitated.

### (9) Characteristics

### (9-1)

In the above embodiment, the controller 80 is configured to increase a ventilation air volume of the ventilator 200 that ventilates in the facility device room R where the heat exchanger unit 30 is installed, in the refrigerant leak third control (the first process), when a refrigerant leak is detected in the heat exchanger unit 30. This promotes discharging of the leaking refrigerant from the facility device room R to another space (an outside space), even when a refrigerant leak occurs in the heat exchanger unit 30. As a result, an increase in a concentration of the refrigerant leaking in the facility device room R is reduced.

### (9-2)

In the above embodiment, when a refrigerant leak is detected in the heat exchanger unit 30, the controller 80 controls an operation of the ventilation fan 210 to increase a ventilation air volume in the facility device room R, in the refrigerant leak third control (the first process). This enables reliable and easy discharge of the leaking refrigerant from the facility device room R to another space when the refrigerant leak has occurred in the heat exchanger unit 30.

### (9-3)

In the above embodiment, the controller 80 is configured to increase an operating time of the ventilation fan 210 per unit time through the refrigerant leak third control (the first process) when a refrigerant leak is detected in the heat exchanger unit 30, in a case where the ventilation fan 210 is in a state of operating intermittently. This causes an increase of the ventilation air volume in the facility device room R.

### (9-4)

In the above embodiment, the controller 80 is configured to continuously operate the ventilation fan 210 that in a state of operating intermittently through the refrigerant leak third control (the first process) when a refrigerant leak in the heat exchanger unit 30 is detected, in a case where the ventilation fan 210 is in a state of operating intermittently. This causes an increase of the ventilation air volume in the facility device room R.

### (9-5)

In the above embodiment, in the heat exchanger unit 30, the exhaust fan 46 that generates the first air flow AF1 (a flow of air flowing from inside of the heat exchanger unit 30 to outside) is arranged. Then, when a refrigerant leak in the heat exchanger unit 30 is detected, the controller 80 shifts the exhaust fan 46 to an operating state or increases the number of rotations of the exhaust fan 46, through the refrigerant leak second control (the first process). Further, in the heat exchanger unit 30, the cooling fan 48 that generates the second air flow AF2 (a flow of air flowing from inside of the heat exchanger unit 30 to outside) is arranged. Then, when a refrigerant leak in the heat exchanger unit 30 is detected, the controller 80 shifts the cooling fan 48 to the operating state or increases the number of rotations of the cooling fan 48, through the refrigerant leak second control (the first process).

This further promotes, when a refrigerant leak occurs in the heat exchanger unit 30, that the leaking refrigerant flows from the heat exchanger unit 30 to the facility device room R, and is then discharged from the facility device room R to the outside space.

### (9-6)

In the above embodiment, when a refrigerant leak in the heat exchanger unit 30 is detected, the controller 80 controls, through the refrigerant leak third control (the first process), the opening and closing mechanism 220 of the ventilator 200 to an open state for communicating between the facility device room R and another space with each other. This enables reliable and easy discharge of the leaking refrigerant from the facility device room R to another space when the refrigerant leak has occurred in the heat exchanger unit 30.

### (9-7)

In the above embodiment, the exhaust fan 46 is arranged near the heat medium pipes Hb, Hc, and Hd. When a refrigerant leak in the heat exchanger unit 30 is detected, the controller 80 shifts the exhaust fan 46 to the operating state or increases the number of rotations, through the refrigerant leak second control (the first process). This reduces flowing of the leaking refrigerant into another use-side space via the heat medium pipes Hb, Hc, and Hd when a refrigerant leak occurs in the heat exchanger unit 30.

### (10) Modifications

The above embodiment can be modified as appropriate as described in the following modifications. Note that the respective modifications are applicable in combination with other modifications insofar as no inconsistency arises.

### (10-1) Modification 1

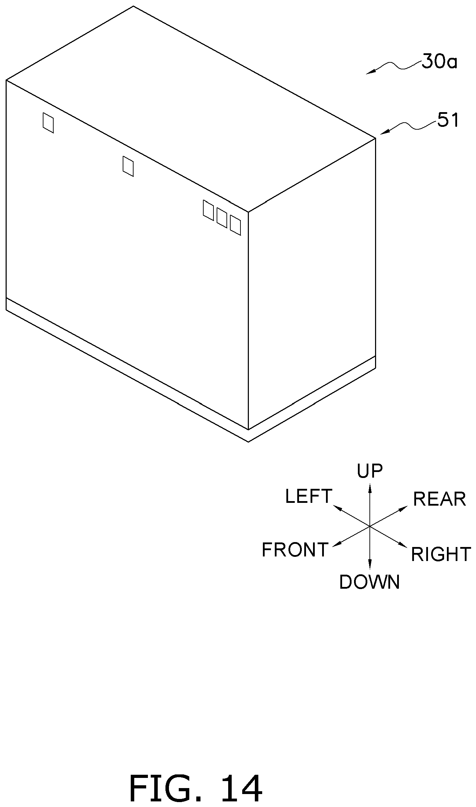

The heat exchanger unit 30 according to the above embodiment may be formed as a heat exchanger unit 30a illustrated in FIGS. 14 to 17. The heat exchanger unit 30a and a heat load processing system 100a including the heat exchanger unit 30a will be described below with a focus mainly on differences from the above embodiment. Features shared with the above embodiment will not be described unless otherwise specified.

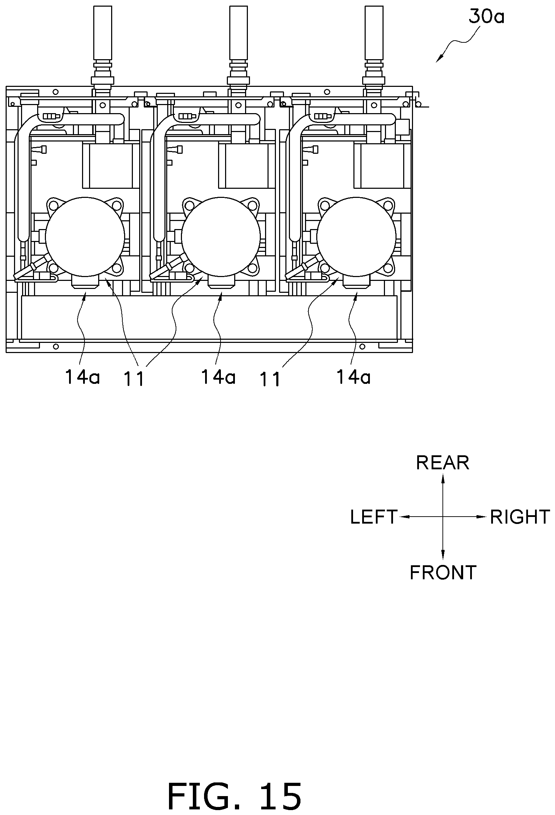

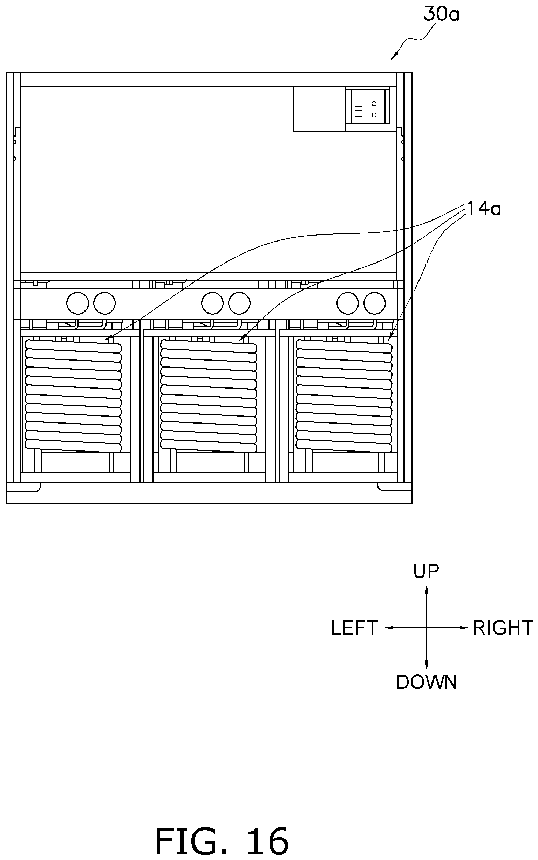

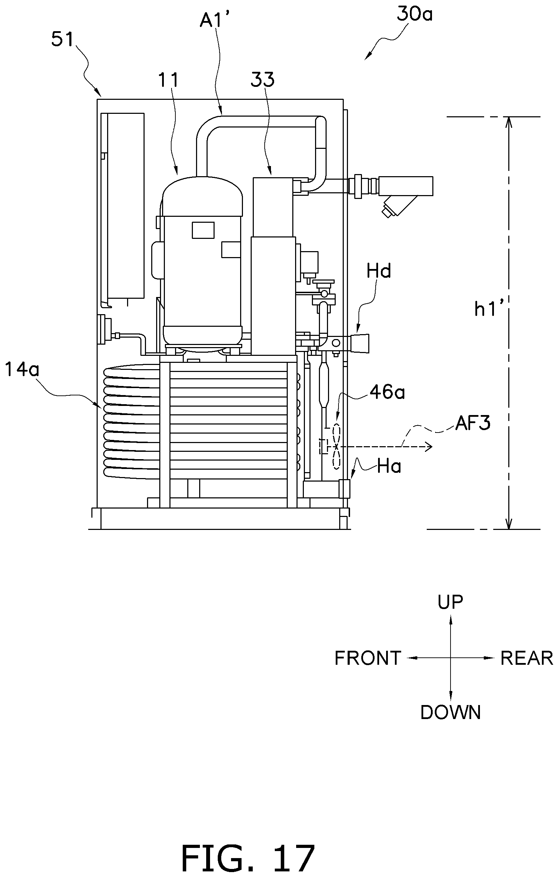

FIG. 14 is a perspective view of the heat exchanger unit 30a. FIG. 15 is a diagrammatic illustration showing a manner of disposition of devices in the heat exchanger unit 30a in a plan view. FIG. 16 is a diagrammatic illustration showing the manner of disposition of the devices in the heat exchanger unit 30a seen from a right side. FIG. 17 is a diagrammatic illustration showing the manner of disposition of the devices in the heat exchanger unit 30a in a front view. In FIG. 17, a reference sign A1' shows a highest portion (uppermost portion) of refrigerant pipes included in the heat exchanger unit 30a and a reference sign h1' shows a height of the uppermost portion A1'. FIGS. 15 to 17 show three refrigerant systems (refrigerant circuits RC) disposed in the heat exchanger unit 30a, to which the ideas according to the present disclosure are not limited. In other words, the heat exchanger unit 30a may include devices forming four or more refrigerant circuits RC or devices forming less than three refrigerant circuits RC.

The heat exchanger unit 30a has devices included in the heat-source-side units 10. To put it more concretely, the heat exchanger unit 30a has a substantially rectangular parallelepiped casing 51, and the casing 51 houses the respective devices included in the heat-source-side units 10 in addition to the respective devices included in the heat exchanger unit 30. In other words, in the heat exchanger unit 30a, it can be said that the heat exchanger unit 30 and the heat-source-side units 10 are formed integrally.

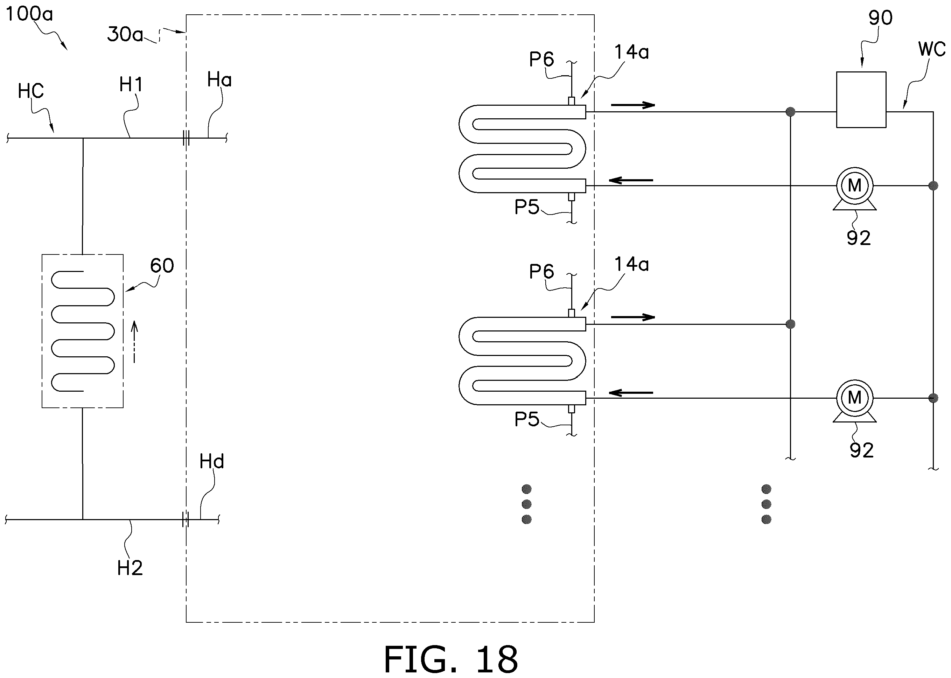

The heat exchanger unit 30a has the heat-source-side heat exchanger 14a in place of the heat-source-side heat exchanger 14. While the heat-source-side heat exchanger 14 is configured to cause a refrigerant and a heat-source-side air flow to exchange heat with each other, the heat-source-side heat exchanger 14a is configured to cause the refrigerant and a heat-source-side heat medium (e.g., water) to exchange heat with each other. The type of the heat-source-side heat exchanger 14a is not limited, and the heat-source-side heat exchanger 14a is a double-pipe heat exchanger, for example. However, as the heat-source-side heat exchanger 14a, it is only required to appropriately select a heat exchanger of the type usable for heat exchange between the refrigerant and the heat-source-side heat medium. The heat exchanger unit 30a does not include a heat-source-side fan 20 in relation to the fact that the heat exchange is performed between the refrigerant and the heat-source-side heat medium (e.g., water). In relation to this, the heat load processing system 100a may be configured as shown in FIG. 18, for example.

FIG. 18 is a schematic configuration diagram of the heat load processing system 100a. In the heat load processing system 100a, a heat-source-side heat medium circuit WC is formed. The heat-source-side heat medium that exchanges heat with the refrigerant in each of heat-source-side heat exchangers 14a flows through the heat-source-side heat medium circuit WC. The heat-source-side heat medium circuit WC includes a cooling tower 90 that cools the heat-source-side heat medium heated as a result of heat exchange with the refrigerant in each of the heat-source-side heat exchangers 14. The cooling tower 90 is installed on a rooftop, for example. The heat-source-side heat medium circuit WC includes a plurality of heat-source-side pumps 92 configured to respectively send the heat-source-side medium to the heat-source-side heat exchangers 14, corresponding in number to the heat-source-side heat exchangers 14, and disposed in parallel.

The heat load processing system 100a does not include liquid-side connection pipes LP and gas-side connection pipes GP in relation to the fact that the heat load processing system 100a has the respective devices included in the heat-source-side units 10.

In the heat load processing system 100a, each of the heat-source-side heat exchangers 14a may heat the refrigerant by use of the heat-source-side heat medium. In this case, another device may be disposed in place of the cooling tower 90 or together with the cooling tower 90.

Also in the heat load processing system 100a, by arranging the exhaust fan unit 45 and the cooling fan 48 in a similar manner to the heat exchanger unit 30, similar functions and effects to those of the above embodiment (for example, the functions and effects of (i) to (iv) above) can be realized.

For example, if the controller 80 is configured to perform control similar to the refrigerant leak first control, the refrigerant leak second control, and the refrigerant leak third control, the heat load processing system 100a exerts similar functions and effects to those in the foregoing (i) to (iii).

Moreover, if the exhaust fan unit 45 is provided such that a suction hole 47a for the first air flow AF1 is disposed at a lower position than the uppermost portion A1' (the highest portion of the refrigerant pipes included in the heat exchanger unit 30a), the heat load processing system 100a exerts similar functions and effects to those in the foregoing (iv).

The heat exchanger unit 30a may include a second exhaust fan 46a (see FIG. 17) in place of or as well as one or both of the exhaust fan unit 45 and the cooling fan 48. The second exhaust fan 46a (corresponding to the "second fan" described in the claims) is arranged near a heat medium pipe (Ha to Hd) arranged in the heat exchanger unit 30a. The second exhaust fan 46a generates a third air flow AF3 flowing from the heat exchanger unit 30a to outside (the facility device room R). The second exhaust fan 46a may be controlled in the refrigerant leak second control such that the second exhaust fan 46a shifts into the operating state or the number of rotations (an air flow volume) of the second exhaust fan 46a increases. By such a second exhaust fan 46a being provided and controlled in the refrigerant leak second control, the functions and effects in (ii) described above can be more remarkably achieved. Especially, the second exhaust fan 46a is disposed near the heat medium pipes (Ha to Hd), which reduces flowing of the leaking refrigerant into the living spaces SP via the heat medium pipes Ha to Hd.

### (10-2) Modification 2

All of the devices configuring the controller 80 (especially, the device control unit 85) in the above embodiment may be disposed in the heat-source-side units 10 or the heat exchanger unit 30. In other words, the controller 80 (especially, the device control unit 85) may be configured by the heat-source-side unit control unit 29 or the heat exchanger unit control unit 49 only.

### (10-3) Modification 3

Part or all of the devices forming the controller 80 in the above embodiment do not have to be disposed in the heat-source-side units 10 or the heat exchanger unit 30 and may be disposed in another place. For example, part or all of the controller 80 may be disposed in a remote place in such a manner as to be able to communicate with the devices controlled by the controller 80. In other words, part or all of the devices controlled by the controller 80 may be remote-controllable.

### (10-4) Modification 4

The cooling fan 48 in the above embodiment is not always necessary and may be omitted as appropriate. In this case, the exhaust fan 46 in the above embodiment may function as the cooling fan 48. In other words, the exhaust fan 46 may be disposed such that the first air flow AF1 cools the heat generating components in the heat exchanger unit control unit 49.

### (10-5) Modification 5

In the above embodiment, the controller 80 is configured to cause the ventilation fan 210 that is operating intermittently to operate continuously in the refrigerant leak second control when a refrigerant leak is detected in the heat exchanger unit 30. From a viewpoint of increasing a ventilation air volume in the facility device room R, it is preferable to cause the ventilation fan 210 to operate continuously. However, in the refrigerant leak second control, it is not always necessary to cause the ventilation fan 210 to operate continuously insofar as the operating time per unit time of the ventilation fan 210 is increased.

### (10-6) Modification 6

In the above embodiment, the suction hole 47a for the first air flow AF1 is formed at the lower position than the lowermost portion A2 (the lowest portion of the refrigerant pipes housed in the heat exchanger unit 30). However, the suction hole 47a may be disposed at a higher position than the lowermost portion A2 insofar as the suction hole 47a is disposed at a lower position than the uppermost portion A1 (the highest portion of the refrigerant pipes housed in the heat exchanger unit 30).

### (10-7) Modification 7

One end (the suction hole 47a) of the flow path forming member 47 of the exhaust fan unit 45 may be connected to the discharge port 58a in the bottom plate 58. In other words, the discharge port 58a in the drain pan may function as the suction hole 47a for the first air flow AF1. In this case, the suction hole 47a for the first air flow AF1 can be said to be formed in the bottom plate 58 (a drain pan).

### (10-8) Modification 8

The numbers and manners of disposition of components disposed in the heat exchanger unit 30, e. g., the refrigerant pipes Pa to Pd, the heat medium pipes Ha to Hd, the expansion valves 31, the on-off valves 32, the heat exchangers 33, and the pump 36 are not limited to the numbers and the manners of disposition shown as examples in the above embodiment and can be changed as appropriate in accordance with the installation environment and the design specifications.

### (10-9) Modification 9

In the above embodiment, the heat exchangers 33 include the first heat exchanger 34 and the second heat exchanger 35. However, this is merely an example and the heat exchangers 33 may include three or more heat exchangers. The heat exchanger 33 may be a single heat exchanger in which the same number of refrigerant flow paths RP as the refrigerant circuits RC are formed, for example. The heat exchanger 33 may include a plurality of heat medium flow paths HP connected in parallel in the heat medium circuit HC.

### (10-10) Modification 10

The manner of a configuration of the refrigerant circuits RC according to the above embodiment can be changed as appropriate in accordance with the design specifications and the installation environment. Specifically, in each of the refrigerant circuits RC, other devices, e.g., a receiver and a valve may be disposed in place of or as well as the devices shown in FIG. 1. Another expansion mechanism may be used in place of each of the expansion valves 31 in the above embodiment. For example, a mechanical expansion valve, a capillary tube, or the like may be used in place of the expansion valve 31.

### (10-11) Modification 11

In the above embodiment, in relation to the fact that the plurality of heat-source-side units 10 are arranged in parallel, the plurality of (here, four) refrigerant circuits RC are formed. In other words, in the heat load processing system 100, the plurality of refrigerant circuits RC are formed by the plurality of heat-source-side units 10 and the heat exchanger unit 30. However, the number of the refrigerant circuits RC and the number of the heat-source-side units 10 do not necessarily have to be the same. The number of the heat-source-side units 10 connected to the heat exchanger unit 30 may be appropriately selected in accordance with the installation environment and the design specifications.

### (10-12) Modification 12

The heat load processing system 100 in the above embodiment is configured to perform the forward cycle operation and the reverse cycle operation. However, the heat load processing system 100 does not have to be configured in this manner. In other words, the heat load processing system 100 may be configured as an apparatus that performs only one of the forward cycle operation and the reverse cycle operation. In this case, the four-way switching valve 13 may be omitted as appropriate.

### (10-13) Modification 13

In the above embodiment, the heat load processing system 100 is the air conditioning system that performs air conditioning of the living spaces SP. However, the heat load processing system 100 does not have to be the air conditioning system and may be other systems. For example, the heat load processing system 100 may be applied to a hot water supply system, a heat storage system, and the like.

In other words, the use-side units 60 are not limited to units for air-conditioning the living spaces SP and may be, for example, various kinds of facilities for cooling and/or heating processing machines or products by utilizing the heat medium cooled or heated by the heat exchanger unit 30.

The use-side units 60 may be, for example, tanks for storing the heat medium cooled or heated by the heat exchanger unit 30. In this case, a pump or the like (not illustrated) sends the heat medium stored in the tank to devices for cooling and/or heating by utilizing the heat medium, for example.

### (10-14) Modification 14

In the above embodiment, the refrigerant leak sensor 70 is disposed in the bottom plate immediate upper space Si in the heat exchanger unit 30. However, a manner of disposition of the refrigerant leak sensor 70 is not necessarily limited to this manner, and may be changed as appropriate in accordance with the installation environment and the design specifications.

For example, the refrigerant leak sensor 70 may be disposed above the bottom plate immediate upper space Si in the heat exchanger unit 30. The refrigerant leak sensor 70 does not have to be disposed in the heat exchanger unit 30. For example, the refrigerant leak sensor 70 may be disposed in a different device from the heat exchanger unit 30 or disposed independently in the facility device room R.

### (10-15) Modification 15

In the above embodiment, the refrigerant leak sensor 70 is disposed in the heat exchanger unit 30, and the controller 80 (the refrigerant leak determination unit 84) determines presence or absence of the refrigerant leak based on signals sent from the refrigerant leak sensor 70. Thus, a refrigerant leak in the heat exchanger unit 30 is detected. However, a manner of detection of the refrigerant leak is not necessarily limited to this manner, and may be changed as appropriate in accordance with the installation environment and the design specifications.

For example, a refrigerant leak in the heat exchanger unit 30 may be detected by configuring the controller 80 (the refrigerant leak determination unit 84) to detect a refrigerant leak in the heat exchanger unit 30 on the basis of any of detection values of the respective heat-source-side sensors S1 and/or the respective heat exchanger unit sensors S2. In such a case, together with the heat-source-side sensor S1 and/or the heat exchanger unit sensor S2, the controller 80 (the refrigerant leak determination unit 84) corresponds to the "refrigerant leak detection unit" that detects a refrigerant leak in the heat exchanger unit 30 (the facility device room R). In this case, it is possible to omit the refrigerant leak sensor 70 as appropriate.

### (10-16) Modification 16

In the above embodiment, in the refrigerant leak third control, operations of the ventilation fan 210 and the opening and closing mechanism 220 are controlled in such manners as to increase a ventilation air volume of the ventilators 200 in the facility device room R. To achieve the effects in the foregoing (iii), it is preferable to perform the refrigerant leak third control in the manner as in the above embodiment. However, in the refrigerant leak third control, it is possible to control an operation of only one of the ventilation fan 210 and the opening and closing mechanism 220. Even in this case, the ventilation air volume in the facility device room R increases and therefore the functions and effects in the foregoing (iii) are still exerted.

### (10-17) Modification 17

It is possible to change an execution order of the refrigerant leak first control, the refrigerant leak second control, and the refrigerant leak third control, in the above embodiment as appropriate. For example, one or both of the refrigerant leak second control and the refrigerant leak third control may be executed before the refrigerant leak first control.

### (10-18) Modification 18

In the above embodiment, in order to achieve the effects in the foregoing (i) and (ii), it is preferable to perform the refrigerant leak first control and the refrigerant leak second control as well as the refrigerant leak third control. However, the refrigerant leak first control and the refrigerant leak second control are not always necessary for the ideas according to the present disclosure and may be omitted as appropriate.

### (10-19) Modification 19

In the above embodiment, when a refrigerant leak occurs in the heat exchanger unit 30, the controller 80 may stop an operation of the pump 36 in the refrigerant leak first control, the refrigerant leak second control, or the refrigerant leak third control. This reduces flowing of the leaking refrigerant to the use-side units 60 (the living spaces SP) via the heat medium circuits HC when the refrigerant leak has occurred in the heat exchangers 33.

### (11)

The embodiment has been described above. However, it should be construed that various changes to modes and details will be available without departing from the gist and the scope recited in the claims.

### INDUSTRIAL APPLICABILITY

The present disclosure can be used for a heat load processing system.

### REFERENCE SIGNS LIST

10: heat-source-side unit
11: compressor
12: accumulator
13: four-way switching valve
14, 14a: heat-source-side heat exchanger
15: subcooler
16: heat-source-side first control valve
17: heat-source-side second control valve
18: liquid-side shutoff valve
19: gas-side shutoff valve
20: heat-source-side fan
21 to 25: first temperature sensor to fifth temperature sensor
27: first pressure sensor
28: second pressure sensor
29: heat-source-side unit control unit
30, 30a: heat exchanger unit
31: expansion valve
32: on-off valve
33: heat exchanger
34: first heat exchanger
35: second heat exchanger
36: pump
41: sixth temperature sensor
42: seventh temperature sensor
43: third pressure sensor
44: fourth pressure sensor
45: exhaust fan unit
46: exhaust fan (first fan/second fan)
46a: second exhaust fan (second fan)
47: flow path forming member
47a: suction hole
48: cooling fan (first fan)
49: heat exchanger unit control unit
50: casing
50a: discharge hole
51: casing
55: electric component box
58: bottom plate
58a: discharge port
60: use-side unit
70: refrigerant leak sensor (refrigerant leak detection unit)
80: controller (control unit)
80a, 80b: adaptor
81: storage unit
82: input control unit
83: mode control unit
84: refrigerant leak determination unit (refrigerant leak detection unit)
85: device control unit (control unit)
86: drive signal output unit
87: information output control unit
90: cooling tower
92: heat-source-side pump
100, 100a: heat load processing system
200: ventilator
210: ventilation fan
220: opening and closing mechanism
300: output device
581: bottom face portion
A1, A1': uppermost portion
A2: lowermost portion
AF1: first air flow
AF2: second air flow
AF3: third air flow
B1: building
D: ventilation duct
GP: gas-side connection pipe
HI: first heat medium connection pipe
H2: second heat medium connection pipe
HC: heat medium circuit
HP: heat medium flow path
Ha to Hd: heat medium pipe
LP: liquid-side connection pipe
P1 to P11: first pipe to eleventh pipe
Pa, Pb, Pc, Pd: refrigerant pipe
R: facility device room
RC: refrigerant circuit
RP: refrigerant flow path
S1: heat-source-side sensor
S2: heat exchanger unit sensor
SP: living space
Sa: lower space
Sb: upper space
Si: bottom plate immediate upper space
WC: heat-source-side heat medium circuit

### CITATION LIST

### PATENT LITERATURE

Patent Literature 1: JP 2006-38323 A

## Claims

1. A heat load processing system (100, 100a) comprising:
a heat exchanger unit (30) including a heat exchanger (33) connected to a refrigerant pipe (Pb, Pc) through which a refrigerant flows and a heat medium pipe (Hb, Hc, Hd) through which a heat medium flows, the heat exchanger being configured to cause the refrigerant and the heat medium to exchange heat with each other;
a refrigerant leak detection unit (70, 84) configured to detect a refrigerant leak in the heat exchanger unit; and
a control unit (80, 85) configured to control an operation of a ventilator (200) that ventilates in a facility device room where the heat exchanger unit is installed,
the control unit configured to execute a first process of increasing a ventilation air volume of the ventilator when the refrigerant leak detection unit detects a refrigerant leak.

2. The heat load processing system (100, 100a) according to claim 1, wherein
the ventilator includes a ventilation fan (210) installed in the facility device room and configured to ventilate, and
in the first process, the control unit is configured to control an operation of the ventilation fan to increase the ventilation air volume.

3. The heat load processing system (100, 100a) according to claim 2, wherein
in the first process, the control unit is configured to increase an operating time per unit time of the ventilation fan that is operating intermittently.

4. The heat load processing system (100, 100a) according to claim 2 or 3, wherein
in the first process, the control unit is configured to continuously operate the ventilation fan that is operating intermittently.

5. The heat load processing system (100, 100a) according to any one of claims 1 to 4, further comprising:
a first fan (46, 48) arranged in the heat exchanger unit and configured to generate an air flow (AF1, AF2) that flows from inside of the heat exchanger unit to outside, wherein
in the first process, the control unit is configured to shift the first fan to an operating state or is configured to increase a number of rotations of the first fan.

6. The heat load processing system (100, 100a) according to any one of claims 1 to 5, wherein
the ventilator includes an opening and closing mechanism (220) configured to switch between an open state for communicating between the facility device room and another space and a closed state for interrupting between the facility device room and the other space, and
the control unit is configured to control the opening and closing mechanism to the open state in the first process.

7. The heat load processing system (100, 100a) according to any one of claims 1 to 6, further comprising:
a second fan (46, 46a) arranged near the heat medium pipe, wherein
in the first process, the control unit is configured to shift the second fan to an operating state or is configured to increase a number of rotations of the second fan.
